# NEUE EUROPÄISCHE PATENTSCHRIFT

(11) **EP 1 284 042 B2**
(45) Veröffentlichungstag und Bekanntmachung des Hinweises auf die Entscheidung über den Einspruch: **26.06.2013**
(45) Hinweis auf die Patenterteilung: 30.06.2004
(21) Anmeldenummer: 01951345.6
(22) Anmeldetag: 15.05.2001
(51) Int. Cl.: H02K 7/116, H02K 21/24, F16H 49/00, E05F 15/16

(54) **ANTRIEBSEINHEIT**
DRIVING UNIT
UNITE D'ENTRAINEMENT

(30) Priorität: 16.05.2000 DE 10024907
(43) Veröffentlichungstag der Anmeldung: 19.02.2003
(73) Patentinhaber: Brose Fahrzeugteile GmbH & Co. KG, Coburg, 96450 Coburg (DE)
(72) Erfinder: SESSELMANN, Helmut, 96523 Steinach (DE); HOFFMANN, Matthias, 96145 Sesslach (DE); SCHULTZ, Markus, 90425 Nürnberg (DE)
(74) Vertreter: Ninnemann, Detlef
(86) Internationale Anmeldenummer: PCT/DE2001/001910
(87) Internationale Veröffentlichungsnummer: WO 2001/089063

(56) Entgegenhaltungen:
- DE-A- 19 708 310
- DE-A1- 2 210 243
- DE-A1- 2 758 874
- DE-A1- 19 751 861
- DE-C1- 19 532 808
- DE-U1- 29 622 874
- JP-A- 10 336 996
- US-A- 3 374 372
- US-A- 3 879 623
- US-A- 5 272 938

## Beschreibung

Die Erfindung bezieht sich auf eine Antriebseinheit für Verstelleinrichtungen in Kraftfahrzeugen mit einem Elektromotor, einem Getriebe und einer elektronischen Steuereinrichtung.

Aus der US-A-5272938 ist eine Antriebseinheit mit einem als Scheibenläufermotor ausgebildeten Elektromotor und einem als Untersetzungsgetriebe ausgebildeten Getriebe sowie einer aus einer Gleichspannungsquelle gespeisten Steuereinrichtung bekannt, bei der das Gehäuse des Scheibenläufermotors die Rotorscheibe, tablettenförmige Permanentmagneten und an der Rotorscheibe anliegende Kohlebürsten umfasst. In einer nach außen gerichteten Vertiefung einer der beiden Gehäüseschalen ist ein Untersetzungsgetriebe in Form eines Planetengetriebes integriert. Ein äußeres, mit dem Rotor des Scheibenläufermotors verbundenes Gehäuse deckt das Gehäuse des Scheibenläufermotors, das Untersetzungsgetriebe und eine Kupplung ab, so dass das Motorgehäuse, das den Elektromotor umgibt, innerhalb des das Getriebe umgebenden Getriebegehäuses angeordnet ist, das somit das Gehäuse der Antriebseinheit bildet.

Die eine Gehäuseschale des Motorgehäuses nimmt zwar einen Teil des Untersetzungsgetriebes auf und bildet somit eine zusätzliche mechanische Funktion des Getriebes aus, sie trennt jedoch auch den als Scheibenläufermotor ausgebildeten Elektromotor von dem als Untersetzungsgetriebe ausgebildeten Getriebe ab, sondern mit doppelter Funktion der einen Gehäuseschale des Elektromotors aneinandergereiht.

Durch die Doppelfunktion der einen Gehäuseschale des Elektromotors kann die Antriebseinheit zwar besonders flach gebaut und demzufolge als Nabenantrieb für ein Fahrrad eingesetzt werden, jedoch sind neben der Doppelfunktion der einen Gehäuseschale des Elektromotors nur die gemeinsame Antriebswelle als ein Bauteil vorgesehen, das sowohl für den Scheibenläufermotor als auch für das Untersetzungsgetriebe eingesetzt wird.

Aus der DE 197 08 310 A1 ist eine Antriebseinheit mit einem Untersetzungsgetriebe bekannt, das als "Harmonic-Drive-Getriebe" bezeichnet wird und sich innerhalb eines starren Stützringes befindet, der eine zylindrische innenverzahnte Stützfläche und eine außenverzahnte, radialflexible Abrollbuchse aufweist. Die Abrollbuchse wird durch eine geeignete Antriebseinrichtung elliptisch verformt, wobei die Antriebseinrichtung unter anderem aus einer innerhalb der Abrollbuchse angeordneten Planetenradeinheit mit einem auf einer Antriebswelle angeordneten und von dieser angetriebenen Sonnenrad besteht, in dessen Außenverzahnung an zwei gegenüberliegenden Stellen die Verzahnungen zweier Planetenräder eingreifen. Die Innen- und Außenverzahnung differiert um einen Zahn oder mehrere Zähne. Der Zahnkranz der radialflexiblen Abrollbuchse wird durch den elliptisch geformten Innenkern der Antriebseinrichtung in die zylindrische, Innenverzahnte Stützfläche des starren Stützringes gedrückt.

Aufgrund der unterschiedlichen Zähnezahl von Stützfläche und Abrollbuchse wird ein permanentes, fortlaufendes Versetzen der ineinandergreifenden Umfangsabschnitte bewirkt, so dass eine ganze Umdrehung der Antriebswelle nur eine Weiterbewegung der Abrollbuchse um die vorgesehene Differenz der Zähnezahl von Stützring und Abrollbuchse bewirkt. Dadurch kann mit einem derartigen Harmonic-Drive-Getriebe eine sehr hohe Untersetzung erreicht werden.

Aus der DE 28 31 774 C2 ist ein Elektromotor mit einem Scheibenrotor bekannt, in dessen ebenem Luftspalt eine eisenlose Statorwicklung angeordnet ist, der wenigstens auf einer Seite ein permanentmagnetisierter Ring mit axial magnetisierten Segmenten und auf beiden Seiten weichmagnetische ebene Scheiben für den magnetischen Rückschluss zugeordnet sind. Koaxial zur Rotorwelle ist ein elektrodynamischer Tachogenerator so angeordnet, dass eine möglichst kompakte Einheit von Elektromotor und Tachogenerator entsteht.

Die bekannte Einheit aus Elektromotor und Tachogenerator besteht aus koaxialen, aneinander gereihten Funktionselementen des Elektromotors und des Tachogenerators, wobei jede Einheit für sich voll funktionsfähig ist, wenn die einzelnen Funktionselemente voneinander getrennt werden.

Bei einer aus der US 3,374,372 bekannten Antriebsvorrichtung ist ein magnetischer Rückschluss vorgesehen, der unter anderem durch eine Platte gebildet ist, die einen Pfad für den magnetischen Fluss bereitstellt. Ein Hohlrad eines Untersetzungsgetriebes ist als separates Bauteil zu der Platte vorgesehen und uber geeignete Verbindungsmittel mit dieser verbunden.

Aufgabe der vorliegenden Erfindung ist es, den Integrationsgrad der eingangs genannten Antriebseinheit durch Mehrfachfunktionen von Bauteilen des Elektromotors und des Getriebes der Antriebseinheit zu erhöhen und damit das Bauvolumen und das Gewicht der Antriebseinheit, die Anzahl der erforderlichen Bauteile und somit die sich aus Bauteilen und Montagekosten zusammensetzenden Herstellungskosten zu reduzieren.

Diese Aufgabe wird erfindungsgemäß durch die Merkmale des Patentanspruchs 1 gelöst.

Die erfndungsgemässe Lösung ermöglicht es, funktionell und/oder statisch unterschiedlich beanspruchte Bauteile des Elektromotors und des Getriebes der Antriebseinheit mit Mehrfachfunktionen zu belegen, so dass nicht gleichartig beanspruchte und übereinstimmende Funktionen erfüllende Bauteile den Integrationsgrad steigern, sondern in ihrer Funktion und statischen Beanspruchung auf unterschiedliche Art und Weise eingesetzte Bauteile. Durch dies Massnahme werden die Integrationsmöglichkeiten deutlich erhöht, da hierdurch die baulichen Gegebenheiten bei der Anordnung eines Elektromotors und Getriebes weniger stark berücksichtigt werden müssen als bei funktionell und/oder statisch gleichartig beanspruchten Bauteilen.

Insbesondere zeichnet sich die erfindungsgemässe Lösung durch folgende Eigenschaften aus:
- minimale Teileanzahl, minimales Gewicht und Volumen durch einen hohen Integrationsgrad der Antriebskomponenten Elektromotor, Elektronik, Sensorik und mechanische Bauteile sowie Möglichkeit der Steigerung des Integrationsgrades durch Einbindung der Antriebseinheit in ein Basisteil, wie Türmodul, Trägerplatte oder dergleichen;
- geringe Herstellungskosten;
- Entfall von separatem Getriebegehäuse und Elektronikanbindungen sowie die Notwendigkeit der Bereitstellung von rechten und linken Gehäusen;
- Möglichkeit des Einbaus der Antriebseinheit in jeder Winkelstellung und Schaffung einer einzigen Montageebene und damit eines variablen Einsatzes insbesondere für Verstelleinrichtungen;
- Weitestgehende Ineinanderschachtelung von Bauteilen des Elektromotors und des Getriebes und damit Erzielung einer geringen Bautiefe der Antriebseinheit.

Die erfindungsgemäße Lösung schafft bei minimaler Teileanzahl, minimalem Gewicht und Volumen der Antriebseinheit einen äußerst hohen Integrationsgrad der einzelnen Antriebskomponenten der Antriebseinheit, die nicht mehr unabhängig voneinander aneinandergereiht sind, sondern so miteinander verknüpft sind, dass bei einer Trennung der Antriebskomponenten jede einzelne Komponente der Antriebseinheit nicht mehr funktionsfähig wäre, das heißt, dass insbesondere bei Entfall eines Motorelements das Getriebe funktionsunfähig und bei Entfall eines Getriebeelements der Motor funktionsunfähig wäre. Damit wird der für die Unterbringung der Antriebseinheit verfügbare Bauraum optimal ausgenutzt wird.

Weiterhin gewährleistet die erfindungsgemäße Lösung einen variablen Einsatz der Antriebseinheit, da separate Getriebegehäuse und Elektronikanbindungen ebenso wie die Notwendigleit der Bereitstellung von rechten und linken Gehäusen entfällt und ein Einbau der Antriebseinheit in jeder Winkel-Stellung möglich ist. Durch die Verringerung der Teilezahl und in Folge des hohen Integrationsgrades sowie durch Schaffung einer einzigen Montageebene werden die Herstellungskosten der Antriebseinheit verringert.

Zur Abgabe eines maximalen Drehmoments ist das in die Antriebseinheit integrierte Getriebe als Untersetzungsgetriebe, insbesondere als Umlaufrädergetriebe in Form eines Cyclo-, Wolfrom-, Planeten-, Taumel- oder Harmonic-Drive-Getriebes ausgebildet.

Als Elektromotoren sind Gleichstrom- und Wechselstrommaschinen flacher Bauart mit mechanischer oder elektronischer Kommutierung, insbesondere Scheibenläufermotoren, geeignet.

Der als Scheibenläufer ausgebildete Elektromotor kann wahlweise als mechanisch kommutierter Motor mit einer die elektrischen Wicklungen und den Kollektor tragenden Läuferscheibe, einen den mindestens einen Permanentmagneten tragenden Stator und einer mit der motorseitigen Gehäuseschale verbundenen Kommutierungseinrichtung oder aus einem elektronisch kommutierten Motor mit einem scheibenförmigen Permanentmagnetrotor und feststehenden Erregerspulen bestehen.

Der Einsatz eines elektronisch kommutiertem Motors ist insbesondere bei einem 42-Volt-Bordnetz vorteilhaft, da elektronisch kommutierte Motoren in besonders vorteilhafter Form mit flachbauenden Getrieben nach dem Cyclo- oder Harmonic-Drive-Prinzip verbindbar sind.

Bei der Verwendung eines elektronisch kommutierten Motors können die feststehenden Erregerspulen auf einer oder auf beiden Seiten des scheibenförmigen Permanentmagnetrotors angeordnet werden.

Der drehende Permanentmagnetrotor gewährleistet kürzeste Flusswege für den magnetischen Kreis und besteht insbesondere aus einer Kombination aus einem Trägerwerkstoff aus Kunststoff oder Leichtmetall mit darin eingebetteten Permanentmagneten. Diese sind insbesondere als gesinterte oder gespritzte Neodynium-Eisen-Bohr-Magnete ausgebildet, wobei die gespritzten Neodynium-Eisen-Bohr-Magnete in Zweikomponenten-Technik hergestellt und direkter Bestandteil des Permanentmagnetrotors sind.

Der hohe Integrationsgrad der erfindungsgemäßen Antriebseinheit wird unter anderem dadurch erreicht, dass sich zumindest ein Teil der Bauteile einzelner Antriebskomponenten, wie Scheibenläufermotor und Untersetzungsgetriebe, wechselseitig abstützt oder als tragendes Bauteil zur Aufnahme oder Abstützung von Bauteilen der jeweils anderen Antriebskomponente oder einer elektronischen Steuereinrichtung dient, insbesondere übernimmt wenigstens ein Bauteil des Elektromotors, beispielsweise die Antriebswelle, der magnetische Rückschluss oder die motorseitige Gehäuseschale zusätzlich eine mechanische Funktion des Getriebes und/oder ein mechanisches Bauteil, beispielsweise die getriebeseitige Gehäuseschale, eine Funktion des Elektromotors oder der elektronischen Steuereinrichtung. Dadurch wird erreicht, daß infolge von Mehrfachfunktionen bestimmter Komponenten die Anzahl notwendiger Bauteile und der Materialeinsatz reduziert werden kann.

Ein wesentliches Bauteil zur Erhöhung des Integrationsgrades der Antriebseinheit stellt der magnetische Rückschluss des Elektromotors, insbesondere eines Scheibenläufermotors dar. Der magnetische Rückschluss kann sowohl als tragendes Bauteil zur Aufnahme verschiedener Komponenten der Antriebseinheit als auch zur Abstützung und Stabilisierung von Antriebskomponenten dienen, die dementsprechend in ihrer mechanischen Eigenstabilität reduziert werden können. Weiterhin kann der magnetische Rückschluss als tragendes Element zur Aufnahme von Halte- oder Befestigungselementen eingesetzt werden bzw. der Befestigung der motorseitigen und getriebeseitigen Gehäuseschalen bzw. der Anbringung der Antriebseinheit an einem Basisteil, wie einer Trägerplatte, einem Türmodul oder einem sonstigen Träger dienen.

Andererseits kann der magnetische Rückschluss beispielsweise durch Verringerung seiner Abmessungen dadurch vereinfacht werden, dass die Antriebseinheit so in ein Basisteil integriert wird, dass das Basisteil mechanische Stutzfunktionen zumindest teilweise übernimmt und bei ferromagnetischer Ausbildung des Basisteils auch als Teil des magnetischen Rückschlusspfades dient.

Der magnetische Rückschluss eines Elektromotors, insbesondere eines Scheibenläufermotors, dient in Verbindung mit einem Untersetzungsgetriebe zur Aufnahme der Innenverzahnung eines gehäusefesten Hohlrades. Die Integration der Innenverzahnung des gehäusefesten Hohlrades in den magnetischen Rückschluss erfolgt wahlweise dadurch, dass entweder der magnetische Rückschluss die Innenverzahnung des gehäusefesten Hohlrades unmittelbar trägt, indem beispielsweise die Innenverzahnung in die Ring-Innenfläche eines kreisringförmigen magnetischen Rückschlusses eingefräst, eingestanzt oder in sonstiger Weise eingeformt wird, oder die Innenverzahnung des gehäusefesten Hohlrades an den magnetischen Rückschluss als Kunststoffverzahnung angespritzt wird.

Das Anspritzen der Kunststoffverzahnung kann dadurch erfolgen, dass die Innenverzahnung an eine auf der Oberfläche des magnetischen Rückschlusses ausgebildete, zurückgenommene Verzahnung angespritzt wird, das heißt die Verzahnung wird durch einen am magnetischen Rückschluss ausgebildeten Verzahnungskern und den angespritzte Kunststoff, der die eigentliche Verzahnung ausbildet, geformt, oder die Innenverzahnung wird an radiale Ausnehmungen und/oder Vorsprünge.

weiterhin kann der magnetische Rückschluss Mittel zur Aufnahme und Positionierung der Magnetquelle des Elektromotors enthalten, die tablettenförmig, kreisringsegmentförmig oder kreisringförmig mit dem magnetischen Rückschluss verbunden bzw. am magnetischen Rückschluss ausgebildet sind. Alternativ ist auch eine einstückige Zusammenfassung von Magnetquelle und magnetischem Rückschluss beispielsweise unter Verwendung hart- und weichmagnetischer Materialien möglich.

Vorzugsweise weist der magnetische Rückschluss nach dem Befestigen der Antriebseinheit mindestens teilweise einen direkten Kontakt zu einem Türinnenblech, Türmodul oder einer Trägerplatte einer Fahrzeugtür auf und ist nur im flussführenden Bereich verstärkt ausgebildet.

Als weiteres Bauteil zur Erzielung eines hohen Integrationsgrades der Antriebseinheit bildet die Antriebswelle sowohl die Motor- als auch die Getriebewelle der Antriebseinheit und bei einem als Planetengetriebe ausgebildeten Untersetzungsgetriebe unmittelbar als antreibendes Sonnenrad und/oder als Lagersitz für den Steg des Planetengetriebes und die umlaufenden Planetenräder oder -rollen.

Weiterhin kann die Antriebswelle mit Nabe als Träger der bestromten Ankerscheibe eines Schleifringläufermotors und als Lagerstelle für die Seiltrommel eines Fensterheberantriebs dienen.

In einer Ausführungsform der Erfindung ist die Antriebswelle fest mit einer Nabe verbunden, die vorzugsweise aus einem an die Läuferscheibe angespritzten Nabenteller und einem den Mittelbereich der Antriebswelle umgebenden Nabenzylinder zusammengesetzt ist. In den Nabenteller können radial zur Antriebswelle beabstandet Achsen zur Aufnahme von den Antriebskern des Untersetzungsgetriebes bildenden Planetenrädern eingesetzt werden.

In einer weiteren Ausgestaltung der Erfindung trägt die Nabe die Läuferscheibe mit den elektrischen Wicklungen und dem Kollektor, vorzugsweise einem Flachkollektor.

Ein weiterer Beitrag zur Steigerung des Integrationsgrades der erfindungsgemäßen Antriebseinheit wird dadurch erzielt, dass die motorseitige Gehäuseschale aus einem ferromagnetischen Material besteht und selbst Teil des magnetischen Rückschlusses ist. Alternativ hierzu kann die motorseitige Gehäuseschale aus Kunststoff bestehen und mit einem ferromagnetischen Rückschlusselement verbunden werden. Weiterhin kann die motorseitige Gehäuseschale integraler Bestandteil eines Trägerelements, beispielsweise einer Leiterplatte, der elektronischen Steuereinrichtung sein oder mit der elektronischen Steuereinrichtung verbunden werden.

In einer weiteren Ausgestaltung der erfindungsgemäßen Lösung trägt die motorseitige Gehäuseschale die Kommutierungseinrichtung für den Elektromotor und/oder eine Sensoreinrichtung für die Antriebseinheit.

Alternativ kann die Läuferscheibe selbst Geber für verschiedene Sensoren, beispielsweise optoelektronische oder magnetische Sensoren sein.

Einen weiteren Beitrag zur Erhöhung des Integrationsgrades der Antriebseinheit leistet die getriebeseitige Gehäuseschale, die ein Lagerelement trägt, dessen innerer Bereich die vergleichsweise schnelllaufende Antriebswelle abstützt und auf dessen äußeren Bereich das vergleichsweise langsam laufende Abtriebshohlrad, beispielsweise einer Seiltrommel für einen Seilfensterheber eines Kraftfahrzeugs, rückwirkungsfrei lagert, das heißt, ohne dass gegenseitige Reibungs- oder Biegeeinflüsse aufgrund der radialen Lagerbelastung durch die Seiltrommel oder die Antriebswelle auftreten.

Um die erfindungsgemäß hoch integrierte Antriebseinheit ohne zusätzlichen Dichtungsaufwand auch in Nass/Trockenraumbereichen, beispielsweise in einer Fahrzeugtür, einsetzen zu können, sind zusätzliche konstruktive Maßnahmen in der integrierten Antriebseinheit vorgesehen, wie beispielsweise
- eine in der angespritzten Kunststoffverzahnung des gehäusefesten Hohlrades des Untersetzungsgetriebes ausgebildete konische Wasserablaufrinne, die dichtend an einer dem Elektromotor zugewandten Innenfläche des Abtriebshohlrades anliegt. Durch diese Maßnahme können beispielsweise das Abtriebshohlrad und die getriebeseitige Gehäuseschale sowie Teile des Antriebskerns im Nassraumbereich einer Fahrzeugtür platziert werden, während die motorseitige Gehäuseschale, die Läuferscheibe sowie die Permanentmagneten und die Lagerung des Antriebskerns auf der Trockenraumseite der Fahrzeugtür angeordnet werden.
- Ausbildung von beispielsweise als rotierende Luftleitschaufeln ausgebildeten Schaufelelementen zur Bildung eines Axiallüfters auf der Nabe, mit der ein Luftstrom von der Trockenraumseite der Antriebseinheit angesaugt und an die Nassraumseite der Antriebseinheit über das Abtriebshohlrad und die getriebeseitige Gehäuseschale abgegeben wird. Durch diese Maßnahme wird ein Luftstrom vom Trockenraum (Motorraum) zum Nassraum (Getrieberaum) zum Kühlen von Elektronik- und Motorbauteilen sowie Eindringen von Feuchtigkeit verhindert.

Zur Erhöhung der Laufruhe, Funktionssicherheit sowie zur Erzeugung eines hohen Drehmoments auf Seiten des Abtriebshohlrades des Getriebes wird insbesondere ein als. Umlaüfrädergetreibe mit einem verzahnten radialflexiblem Ring ausgebildetes Untersetzungsgetriebe mit folgenden Eigenschaften eingesetzt:
- laufruhig, hohe innere Systembedämpfung, schall- und schwingungsdämpfend,
- toleranzausgleichend, Spielfreiheit,
- optimale Übertragung unterschiedlicher Drehmomente und Drehzahlen an der Außen- und Innenseite des radialflexiblen Rings,
- formstabil und dauerbeständig,
- geringe Reibung,
- Übertragung großer Kräfte bei geringen Flächenpressungen (große Zähnezahl oder Kraftübertragungsflächen im Eingriff, d.h. optimale Eingriffsverhältnisse).

Bei einer Verwendung der erfindungsgemäßen Antriebseinheit für einen Seilfensterheber eines Kraftfahrzeuges .ist das Abtriebshohlrad als Seilrolle ausgebildet und die getriebeseitige Gehäuseschale weist Öffnungen zur Durchführung eines Fensterheberseils auf. Durch diese Maßnahme sowie durch eine variable Einhängung für das Fensterheberseil in der Seilaufwicklung der Seilrolle und durch die Verbindung von Bowdenabstützungen unmittelbar mit der getriebeseitigen Gehäuseschale können variable Ausgänge für das Fensterheberseil vorgesehen werden und damit die Antriebseinheit in beliebiger Lage in Bezug auf die Seilführungen auf einem Trägerblech oder in einem Türmodul montiert werden.

Weiterhin können spezielle Seileinhängungen an der Seiltrommel so vorgesehen werden, dass das Fensterheberseil am Ende der Montage einhängbar ist.

Bei Verwendung der erfindungsgemäßen Antriebseinheit für Verstelleinrichtungen in Kraftfahrzeugen kann die Antriebseinheit so mit einem Basisteil, wie einem Türmodul, einer Trägerplatte oder dergleichen verbunden werden, dass das, Basisteil eine mechanisch stabilisierende oder tragende Funktion übernimmt. Darüber hinaus übernimmt das ferromagnetische Basisteil teilweise Rückschlußfunktionen und dient beim Einsatz von Halbleiterendstufen zur Speisung des Elektromotors als Kühlkörper und/oder leitet die Verlustwärme des Elektromotors ab. Die letztgenannte Möglichkeit gestattet einen zusätzlichen Schutz vor thermischer Überlastung des Elektromotors und eine Reduktion des Motorgewichts.

Anhand von in der Zeichnung dargestellten Ausführungsbeispielen soll der der Erfindung zugrundeliegende Gedanke näher erläutert werden. Es zeigen:
- Figur 1 -: einen Schnitt durch eine Antriebseinheit mit einem mechanisch kommutierten Scheibenläufermotor und einem als Umlaufrädergetriebe mit einem verzahnten radialflexiblen Ring ausgebildetem Untersetzungsgetriebe ;
- Figur 2 -: eine vergrößerte Darstellung der Getriebeteile des Untersetzungsgetriebes gemäß Figur 1;
- Figuren 3 bis 6 -: schematisch-perspektivische Darstellungen von Teilen der Antriebseinheit gemäß Figur 1;
- Figur 7 -: einen Schnitt durch eine Antriebseinheit mit einem elektronisch kommutierten Scheibenläufermotor mit einseitig angeordneten feststehenden Erregerspulen und einem als Umlaufrädergetriebe mit einem verzahnten radialflexiblen Ring ausgebildetem Untersetzungsgetriebe;
- Figur 8 -: einen Schnitt durch, eine Antriebseinheit mit einem elektronisch kommutierten Scheibenläufermotor mit doppelseitig angeordneten feststehenden Erregerspulen;
- Figur 9 -: einen Schnitt durch ein als Umlaufrädergetriebe mit einem verzahnten radialflexiblen Ring ausgebildetes Untersetzungsgetriebe;

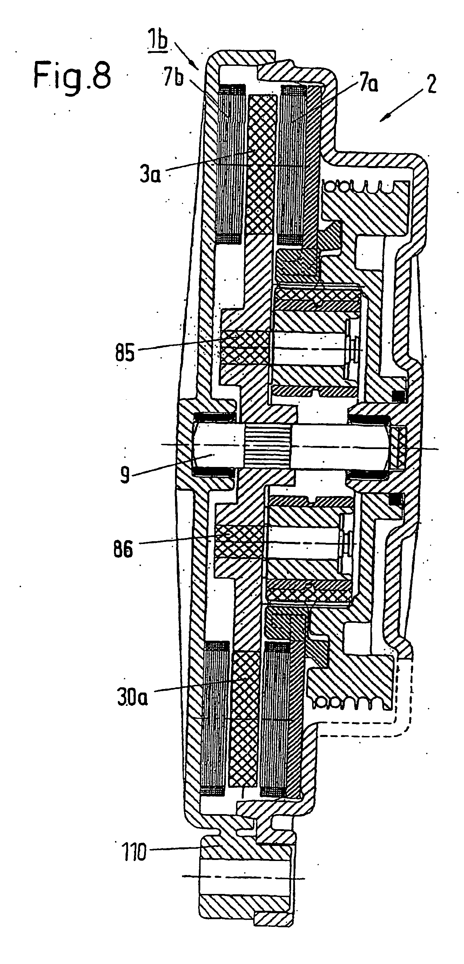

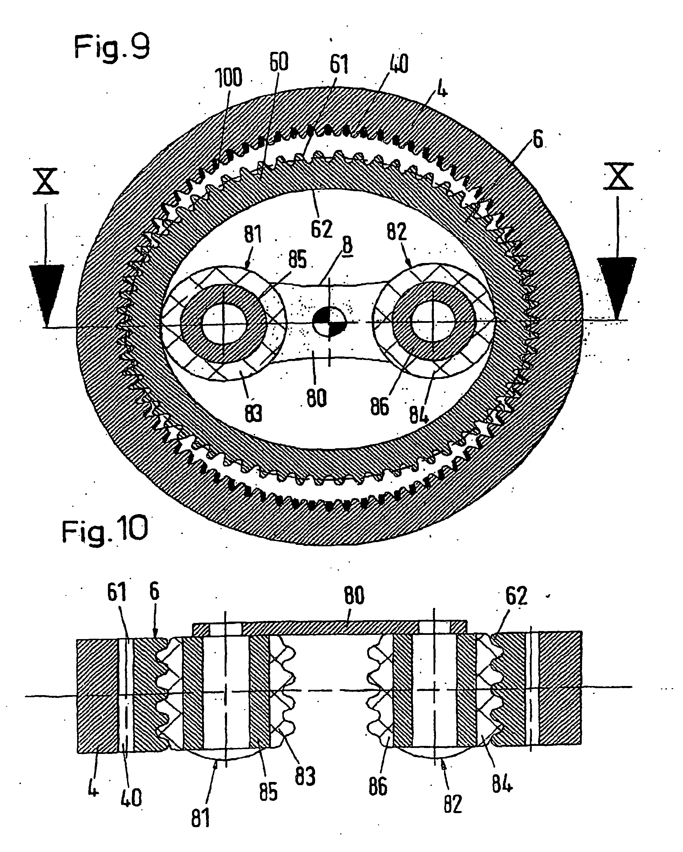

- Figur 8 -: einen Schnitt durch das Untersetzungsgetriebe gemäß Figur 9 entlang der Linie X-X und

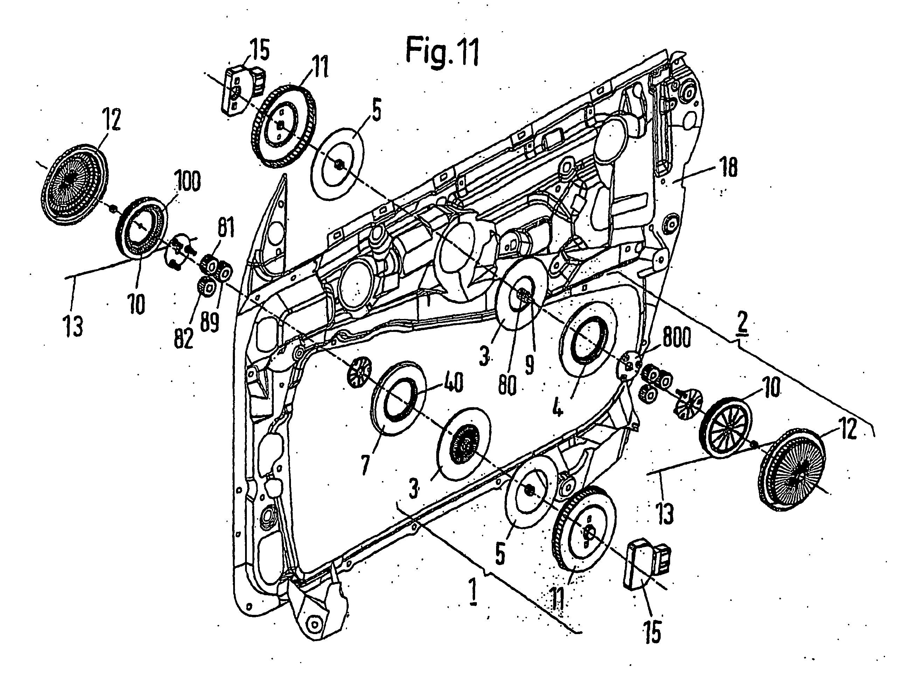

- Figur 11 -: eine Explosionsdarstellung einer Antriebseinheit in Verbindung mit einer Kraftfahrzeugtür als Basisteil.

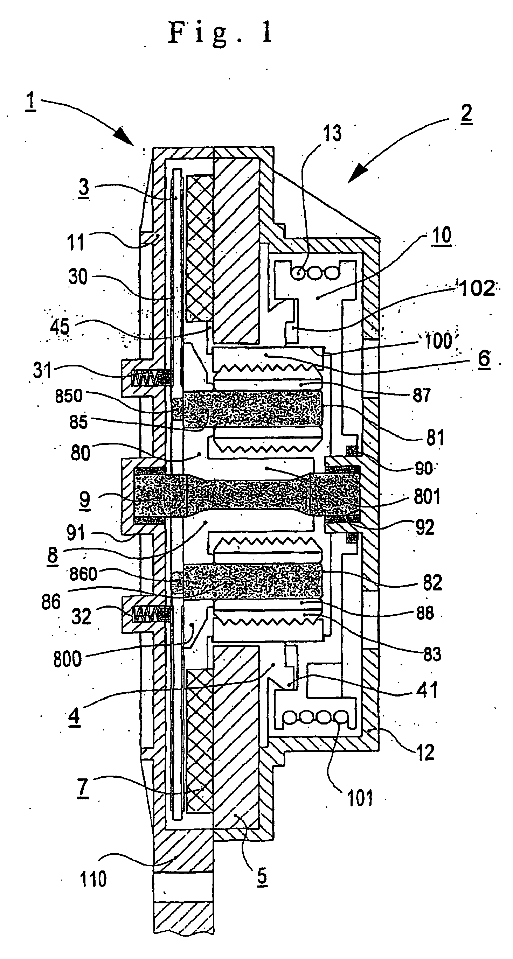

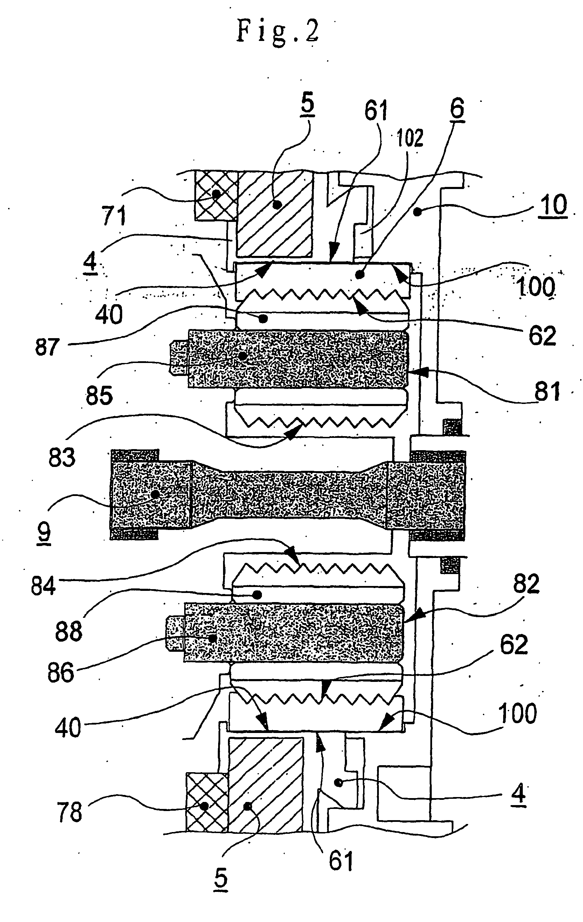

Die in den Figuren 1 bis 6 dargestellte Antriebseinheit besteht aus der Integration eines als mechanisch kommutierter Scheibenläufermotors 1 ausgebildeten Elektromotors und eines als Umlaufrädergetriebe mit einem verzahnten radialflexiblen Ring ausgebildeten Untersetzungsgetriebes als Antriebseinheit für einen Seilfensterheber. Der hohe Integrationsgrad der Antriebseinheit wird insbesondere durch die Schnittdarstellung in Figur 1 und die in Figur 2 vergrößert dargestellten Getriebeteile des Untersetzungsgetriebes verdeutlicht, die die Mehrfachfunktion einzelner Bauteile der Antriebseinheit zeigen.

Bauteile und Funktionselemente des mechanisch kommutierten Scheibenläufermotors 1 sind die mit Leiterschleifen 30 versehene Läuferscheibe 3, die in Lagerstellen einer motorseitigen Gehäuseschale 11 angeordneten Bürsten und Bürstenfedern 31, 32, die als Magnetquelle dienenden Permanentmagneten 7 gemäß Figur 1 bzw. 71, 78 gemäß Figur 2 sowie der magnetische Rückschluss 5.

Die Läuferscheibe 3 ist mit einer Nabe 80 verbunden, die sich aus einem Nabenteller 800, der an die Oberfläche der Läuferscheibe angrenzt und einem Nabenzylinder 801 zusammensetzt, der die mit der Läuferscheibe 3 fest verbundene Antriebswelle 9 umgibt. Die Läuferscheibe 3 ist vorzugsweise an den Nabenteller 800 angespritzt, der unter anderem zur Erhöhung der mechanischen Stabilität der Läuferscheibe 3 dient. Die motorseitige Gehäuseschale 11 besteht vorzugsweise aus einem ferromagnetischen Material zur Bildung eines magnetischen Rückschlusspfades.

Die Bauteile und Funktionselemente des Untersetzungsgetriebes 2 sind ein gehäusefestes Hohlrad 4 mit einer Innenverzahnung 40, ein mit einem Teil seiner Außenverzahnung 61 mit der Innenverzahnung 40 des gehäusefesten Hohlrades 4 kämmender radialflexibler Ring 6, ein mit einer Innenmantelfläche 62 des radialflexiblen Rings 6 in Eingriff stehendes Profil eines Antriebskernes 8 und ein mit seiner Innenverzahnung 100 mit einem Teil der Außenverzahnung 61 des radialflexiblen Rings 6 in Eingriff stehendes Abtriebshohlrad 10, das in dem dargestellten Ausführungsbeispiel als Seiltrommel eines Seilfensterhebers ausgebildet ist, sowie eine getriebeseitige Gehäuseschale 12.

Der Antriebskern 8 wird durch die mit der Läuferscheibe 3 verbundene Nabe 80 mit den radial zur Antriebswelle 9 beabstandeten Planetenrädern 81, 82 gebildet, deren Achsen 85, 86 in die Nabenscheibe 800 sowie mit einem Bund 850, 860 in die Läuferscheibe 3 eingesetzt sind. Die Planetenräder 81, 82 weisen ein profiliertes Rippenrad 83, 84 vorzugsweise aus Gummi auf, das auf eine Lagerhülse 87, 88 vorzugsweise aus einem Sinterwerkstoff aus Eisen, Bronze oder einem gespritzten Kunststoff aufgezogen ist. Die Lagerhülsen 87, 88 sind drehbar auf den Achsen 85, 86 der Planetenräder 81, 82 angeordnet.

Die profilierten Rippenräder 83, 84 der Planetenräder 81, 82 stehen in Eingriff mit einer gleichartig profilierten Innenmantelfläche 62 des radialflexiblen Rings 6. Das rippenförmig umlaufende Profil des radialflexiblen Rings 6 und der Planetenräder 81, 82 bewirkt einen radialen Toleranzausgleich durch eine flexible Geometrie, vermeidet axiale Wanderbewegungen des radialflexiblen Ringes 6 und gewährleistet eine hohe Laufruhe des Untersetzungsgetriebes 2.

Das gehäusefeste Hohlrad 4 wird durch ein an den magnetischen Rückschluss 5 des Scheibenläufermotors 1 angespritztes Kunststoffformteil 45 gebildet, das eine Innenverzahnung 40 trägt, die mit einem Teil der Außenverzahnung 61 des radialflexiblen Rings 6 kämmt. Abweichend von dem in diesem Ausführungsbeispiel dargestellten gehäusefesten Hohlrad 4 als Kunststoffformteil 45 mit darin ausgebildeter Innenverzahnung 40 kann die Innenverzahnung 40 unmittelbar an die Ring-Innenfläche des magnetischen Rückschlusses 5 angespritzt werden bzw. auf eine unmittelbar im magnetischen Rückschluss 5 ausgebildete, zurückgenommene Verzahnung aufgetragen werden oder auf andere radial gerichtete Ausnehmungen oder Vorsprünge des magnetischen Rückschlusses 5 als Innenverzahnung 40 des gehäusefesten Hohlrades 4 aufgespritzt werden.

Das Kunststoffformteil 45 weist eine angespritzte Wasserrinne 41 auf, die mit einer Dichtungslippe an einer radialen Wand einer Ausnehmung 102 des Abtriebshohlrades 10 anliegt und dafür sorgt, dass Feuchtigkeit von der Getriebeseite der Antriebseinheit nicht in die Motorseite der Antriebseinheit gelangt. Zwischen dem Abtriebshohlrad 10 und dem Kunststoffformteil 45 des gehäusefesten Hohlrades 4 wird zusätzlich ein Hohlraum für eine Dichtung gelassen, die als Lippendichtung in diesen Hohlraum einsetzbar ist und vorzugsweise wie ein Rückschlagventil wirkt, das im Stillstand dichtet und sich im Lauf öffnet, so dass eine Luftführung durch diesen Hohlraumbereich möglich ist.

Eine derartige Luftführung kann dadurch erzielt werden, dass die Nabe 80 Schaufelelemente zur Bildung eines Axiallüfters aufweist, mit der ein Luftstrom beispielsweise von der Motorseite (Trockenraumseite) der Antriebseinheit angesaugt und über das Abtriebshohlrad 10 und die getriebeseitige Gehäuseschale 12 an eine Naßraumseite der Antriebseinheit abgegeben wird.

Die schnelllaufende Antriebswelle 9 ist einerseits in einem motorseitigen Lager 91 der motorseitigen Gehäuseschale 11 und andererseits in einem getriebeseitigen Lager 92 der getriebeseitigen Gehäuseschale 12 gelagert. Das getriebeseitige Lager 92 trägt an seinem Außenumfang eine Lagerung 90 für das langsamlaufende Abtriebshohlrad 10, dessen Innenverzahnung 100 mit einem Teil der Außenverzahnung 61 des radialflexiblen Rings 6 kämmt. An seiner Peripherie weist das Abtriebshohlrad 10 eine spiralförmige Rille 101 zur Aufnahme eines Fensterheberseils 13 auf, das durch Öffnungen der getriebeseitigen Gehäuseschale 12 geführt und über Seilumlenkrollen mit einem Mitnehmer für die Fensterscheibe eines Seilfensterhebers verbunden ist.

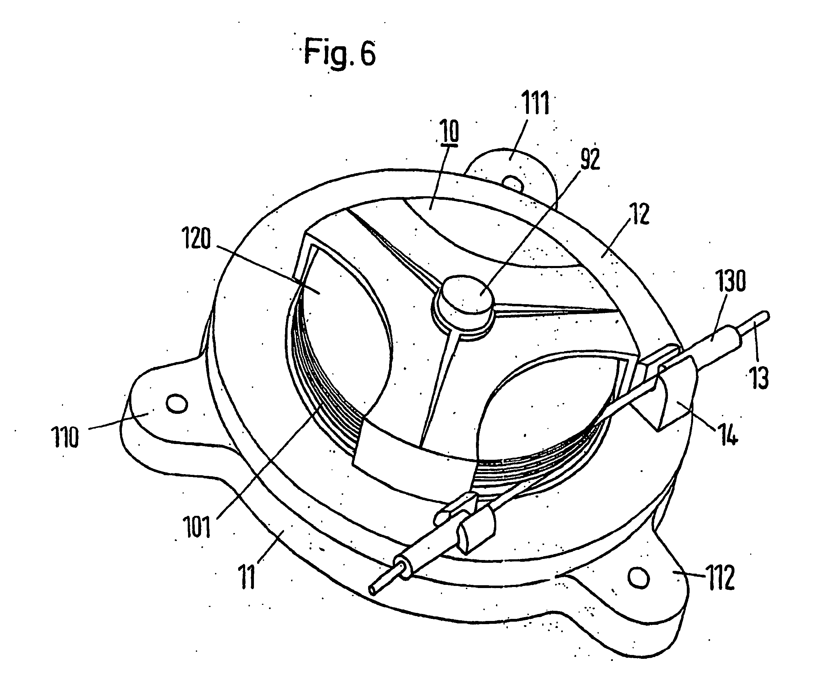

Die Verbindung der Antriebseinheit mit einem Basisteil erfolgt gemäß Fig. 6 über mehrere am Umfang der motorseitigen Gehäuseschale 11 verteilt angeordnete Flansche 110, 111, 112.

Das Fensterheberseil 13 ist außerhalb der Antriebseinheit gemäß Figur 6 in einer Bowdenhülle 130 angeordnet, die an der getriebeseitigen Gehäuseschale 12 in Bowdenabstützungen 14 gelagert ist, die variabel auf der getriebeseitigen Gehäuseschale 12 angeordnet werden können.

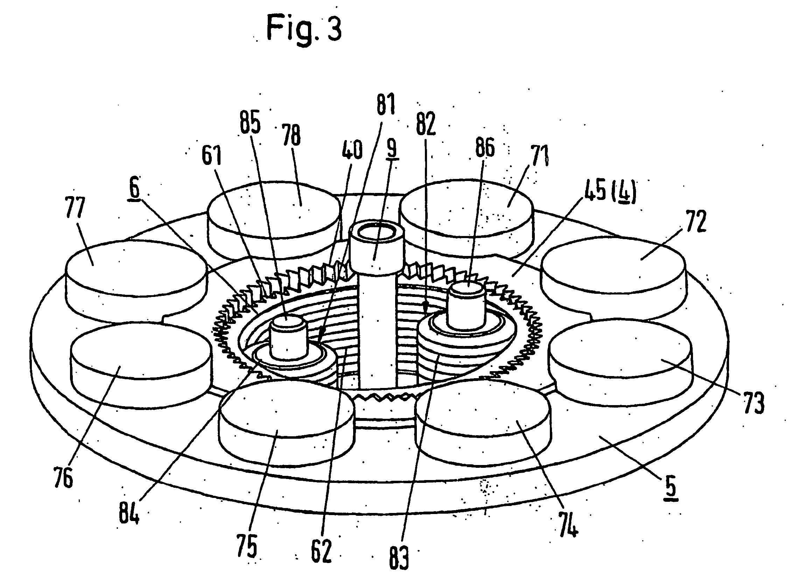

Die in den Figuren 3 bis 6 dargestellten perspektivischen Einzelheiten der in den Figuren 1 und 2 dargestellten Antriebseinheit verdeutlichen den Aufbau, die Funktion und Zuordnung der einzelnen Bauteile der Antriebskomponenten. So zeigt Figur 3 eine Schrägansicht auf die Antriebseinheit von der Motorseite mit dem magnetischen Rückschluss 5 und den integral mit dem magnetischen Rückschluss 5 verbundenen Permanentmagneten 71 bis 78 mit wechselnder Polarität, die tablettenförmig ausgebildet sind. Im Bereich der Ring-Innenfläche des magnetischen Rückschlusses 5 ist das Kunststoff-Formteil 45 des gehäusefesten Hohlrades 4 mit dem magnetisehen Rückschluss 5 verbunden, das heißt auf die Ring-Innenfläche des magnetischen Rückschlusses 5 aufgespritzt bzw. in der vorstehend beschriebenen Weise auf die Ring-Innenfläche des magnetischen Rückschlusses 5 aufgetragen.

Der radialflexible Ring 6 kämmt mit seiner Außenverzahnung 61 mit der Innenverzahnung 40 des gehäusefesten Hohlrades 4 und weist auf seiner Innenmantelfläche 62 ein rippenförmiges Profil auf, das mit dem in gleicher Weise ausgebildeten Rippenprofil 83, 84 der Planetenräder 81, 82 in Eingriff steht. Die Planetenräder 81, 82 sind auf den Achsen 85, 86 gelagert, die über die in dieser Ansicht nicht erkennbaren Nabe mit der Antriebswelle 9 der Antriebseinheit verbunden sind.

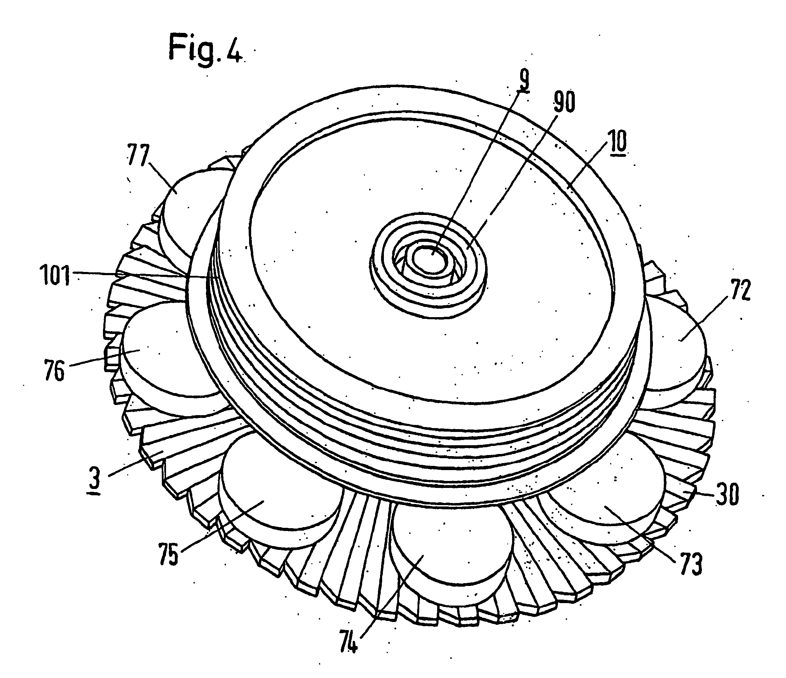

Figur 4 zeigt eine perspektivische Schrägansicht von der Getriebeseite der Antriebseinheit mit dem als Seiltrommel mit spiralförmiger Seilführungsrille 101 ausgebildeten Abtriebshohlrad 10, das auf dem Lager 90 der gehäuseseitigen Lagerschale gelagert ist, die gleichzeitig in einem Innenlager die Antriebswelle 9 aufnimmt. In dieser Darstellung ist die mit Leiterschleifen 30 versehene Läuferscheibe 3 zu erkennen, die sich im magnetischen Kreis befinden und von denen in der Darstellung gemäß Figur 3 die Permanentmagneten 72 bis 77 zu erkennen sind.

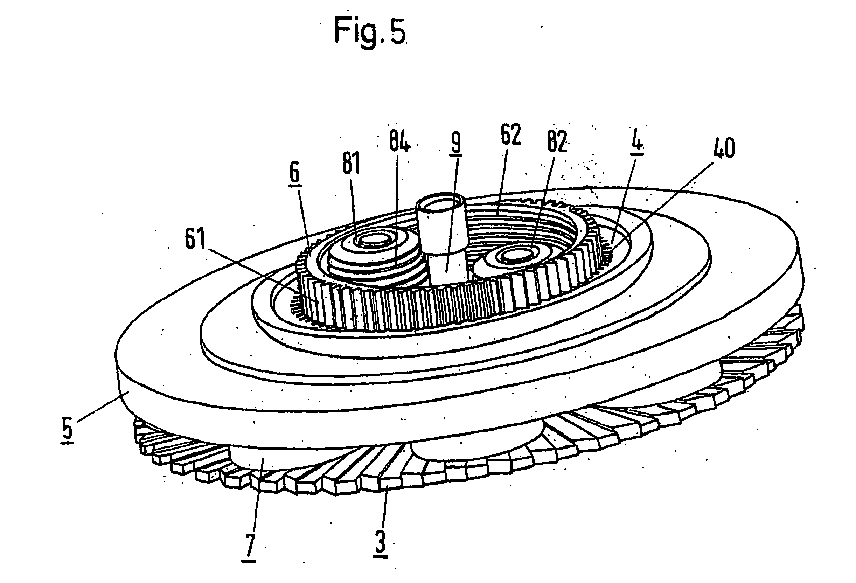

Figur 5 zeigt eine perspektivische Seitenansicht der Antriebseinheit mit der Läuferscheibe 3, dem Permanentmagneten 7, dem magnetischen Rückschluss 5 sowie dem radialflexiblen Ring 6, dessen Außenverzahnung 61 zum Eingriff mit der Innenverzahnung des Abtriebshohlrades herausragt. Die Außenverzahnung 61 des radialflexiblen Rings 6 kämmt in der Darstellung gemäß Figur 5 mit der Innenverzahnung 40 des gehäusefesten Hohlrades 4, das auf den magnetischen Rückschluss 5 aufgespritzt ist.

Innerhalb des radialflexiblen Rings 6 ist der Antriebskern mit den Planetenrädern 81, 82 angeordnet, deren profilierte Rippenräder mit der rippenförmigen Innenmantelfläche 62 des radialflexiblen Rings 6 in Eingriff stehen. Weiterhin zeigt Figur 5 die Antriebswelle 9, die mit ihrem in dieser Darstellung herausragenden Ende in der getriebeseitigen Gehäuseschale gelagert ist.

Schließlich zeigt Figur 6 eine perspektivische Schrägansicht der zusammengebauten Antriebseinheit. Die motorseitige Gehäuseschale 11 weist Befestigungsflansche 110, 111, 112 zur Anbringung an einem Basisteil auf und ist beispielsweise mittels Clipsverbindungen mit der getriebeseitigen Gehäuseschale 12 verbunden. Die getriebeseitige Gehäuseschale 12 weist Öffnungen 120 auf, die den Zugang eines Fensterheberseils 13 zur spiralförmigen Seilführungsrille 101 des als Seiltrommel ausgebildeten Abtriebshohlrades 10 ermöglicht. Das Fensterheberseil 13 ist in Bowdenhüllen 130 geführt, die an Bowdenabstützungen 14 befestigt sind, die an beliebiger Stelle am Umfang der getriebeseitigen Gehäuseschale 12 angebracht werden können. In der Mitte der getriebeseitigen Gehäuseschale 12 ist der Lagerdeckel 92 des Lagers für die Antriebswelle bzw. die Seiltrommel oder das Abtriebshohlrad 10 ausgebildet.

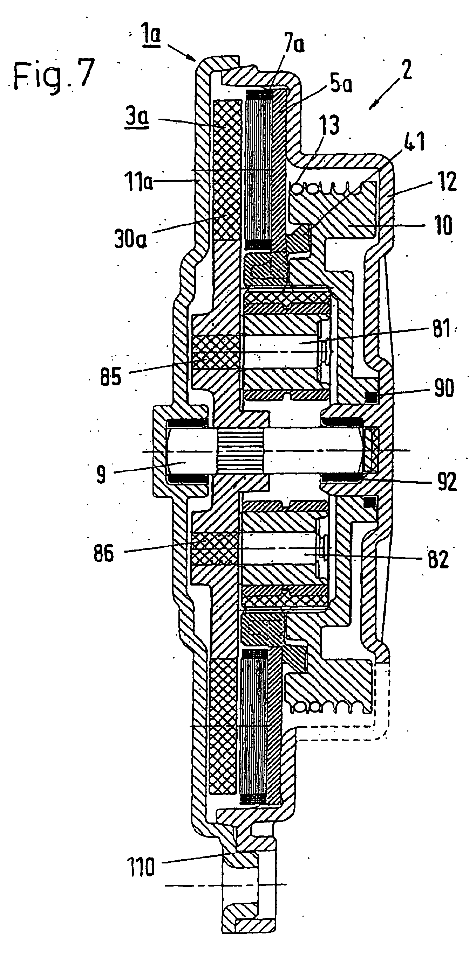

Die in den Figuren 7 und 8 dargestellte Antriebseinheit mit einem elektronisch kommutierten Scheibenläufermotor 1a mit integriertem Umlaufrädergetriebe 2 unterscheidet sich von der in den Figuren 1 bis 6 dargestellten und vorstehend beschriebenen Antriebseinheit in der Ausgestaltung des Motorteils als elektronisch kommutiertem Scheibenläufermotor 1a, der einen drehenden Permanentmagnetrotor 3a sowie feststehende Erregerspulen 7a aufweist, so dass die in den Figuren 7 und 8 verwendeten Bezugsziffern mit den Bezugsziffern der Figuren 1 bis 6 übereinstimmen und demzufolge Bezug auf die vorstehende Beschreibung der Einzelheiten des Umlaufrädergetriebes 2 genommen wird.

Der elektronisch kommutierte Scheibenläüfermotor 1a mit integriertem Umlaufrädergetriebe 2 eignet sich vorzugsweise für Bordnetze höherer Spannung und ist besonders vorteilhaft mit flachbauenden Getrieben nach dem Cyclo- oder Harmonic-Drive-Prinzip wie mit dem in den Figuren 7 und 8 dargestellten Umlaufrädergetriebe zu verbinden.

In Figur 7 sind feststehende Erregerspulen auf der der motorseitigen Gehäuseschale 11a gegenüberliegenden Seite des Permanentmagnetrotors 3a angeordnet, während in Figur 8 eine doppelseitige Anordnung der feststehenden Erregerspulen 7a und 7b vorgesehen ist, die zu beiden Seiten des Permanentmagnetrotors 3a angeordnet sind.

Der drehende Permanentmagnetrotor 3a ist in den beiden Ausführungsformen der Figuren 7 und 8 eine Kombination aus einem Trägerwerkstoff aus Kunststoff oder Leichtmetall und Permanentmagneten 30a, die in den Trägerwerkstoff eingebettet oder mit diesem verbunden sind. Vorzugsweise finden gesinterte oder gespritzte Neodynium-Eisen-Bohr-Magnete Verwendung, die in Zweikomponenten-Technik hergestellt werden und direkter Bestandteil des Scheibenläufermotors 3a sind.

Das Umlaufrädergetriebe 2 entspricht in seinen Einzelheiten dem vorstehend anhand der Figuren 1 bis 6 dargestellten und beschriebenen Umlaufrädergetriebes 2, wobei in der Ausführungsform gemäß den Figuren 7 und 8 die Lagerbolzen beziehungsweise Achsen 85, 86 der Planetenräder 81, 82 besonders massiv und stabil in den drehenden Permanentmagnetrotor 3a eingebunden sind.

Figur 9 zeigt einen Querschnitt und Figur 10 einen Längsschnitt durch ein Untersetzungsgetriebe entlang der Linie X-X gemäss Figur 9 mit einem gehäusefesten Hohlrad 4 mit Innenverzahnung 40 und einem mit dem gehäusefesten Hohlrad 4 fluchtenden und in Betrachtungsrichtung hinter dem gehäusefesten Hohlrad 4 liegenden Abtriebshohlrad, dessen Innenverzahnung 100 durch unterschiedliche Zähnezahl gegenüber der Innenverzahnung 40 des gehäusefesten Hohlrades 4 versetzt ist. Mit den Innenverzahnungen 40, 100 des gehäusefesten Hohlrades 4 und des Abtriebshohlrades kämmt die Außenverzahnung 61 eines radialflexiblen Rings 6, dessen Innenmantelfläche 62 mit einem rippenförmigen Profil 62a versehen ist, das in profilierte Rippenräder 83, 84 von zwei den Antriebskern 8 bildenden Planetenrädern 81, 82 eingreift.

Die Planetenräder 81, 82 weisen Lagerhülsen 87, 88 vorzugsweise aus einem Sinterwerkstoff, wie Eisen, Bronze oder einem gespritzten Kunststoff auf, die drehbar auf Achsen 85, 86 der Planetenräder 81, 82 angeordnet sind. Die Achsen 85, 86 sind auf einen Steg oder eine Nabe 80 aufgesteckt, die mit einer Antriebswelle 9 verbunden ist.

Der Kernbereich 60 oder das Trägermaterial des radialflexiblen Rings 6 kann in dieser Ausführungsform aus einem Elastomer bestehen, dessen Formstabilität von der Innenmantelfläche 62 zur Außenverzahnung 61 hin zunimmt, das heißt von einem weichen, toleranzausgleichenden und systembedämpfenden Werkstoff in einen härteren, aber ausreichend flexiblen Bereich der Außenverzahnung 61 übergeht.

Die in Eingriff mit der profilierten Innenmantelfläche 62 des radialflexiblen Rings 6 stehenden profilierten Rippenräder 83, 84 der Planetenräder 81, 82 bestehen aus Gummi oder einem weichen Kunststoff für einen hohen radialen Toleranzausgleich durch eine flexible Geometrie, wobei die Rippenstruktur axiale Verlagerungen des radialflexiblen Rings 6 verhindert und eine hohe Laufruhe des Untersetzungsgetriebes gewährleistet.

Zur Steigerung der Formstabilität und Dauerbeständigkeit sowie zur Gewährleistung einer hohen Kraft- und Drehmomentübertragung kann die Außenverzahnung 61 des radialflexiblen Rings 6 zusätzlich mit einem harten Werkstoff beschichtet werden.

In Fig. 11 ist eine Explosionsdarstellung einer Antriebseinheit für einen Seilfensterheber mit einem Scheibenläufermotor 1, einem Planetengetriebe 2 mit drei Planetenrädern 81, 82, 89 und einer den Scheibenläufermotor 1 ansteuernden Elektronikeinheit 15 aus zwei entgegengesetzten Ansichten in Bezug zu einer Fahrzeugtür 18 als Basisteil dargestellt.

Der Scheibenläufermotor 1 und das Planetengetriebe 2 sind von zwei Gehäusehälften 11 und 12 umschlossen, das Öffnungen zum Ein- und Austritt eines Fensterheberseiles 13 aufweist. In der Elektronikeinheit 15 sind unter anderem die nicht dargestellten Bürsten sowie Sensoren, z.B. für die Drehzahl oder die Stellung des Scheibenläufermotors 1, untergebracht. Dabei ist vorgesehen, daß die Elektronikeinheit 15 auf der Trockenraumseite angebracht ist, während sich der Scheibenläufermotor 1 und das Planetengetriebe 2 auf der Naßraumseite der Fahrzeugtür 18 befinden.

In dem Trockenraum, der beispielsweise durch ein nicht dargestelltes Trägermodul von dem Naßraum getrennt ist, ist die Elektronikeinheit 15 mit den notwendigen Anschlüssen für die Spannungsversorgung, den Bürsten sowie Sensoreinrichtungen für die Position und Drehzahl des Scheibenläufermotors 1 dargestellt.

Auf der Naßraumseite finden sich die übrigen Komponenten der Antriebseinheit, nämlich der Scheibenläufermotor 1 und das Planetengetriebe 2 sowie die motorseitigen und getriebeseitigen Gehäuseschalen 11 und 12. In der motorseitigen Gehäuseschale 11 befinden sich Öffnungen für Sensoren und Bürsten, die von den korrespondierenden Elementen in der Elektronikeinheit 15 durchgriffen werden. Auf der der Elektronikeinheit 15 abgewandten Seite der motorseitigen Gehäuseschale 11 ist eine magnetische Rückschlußscheibe 5, die Läuferscheibe 3 und eine Magnetscheibe 7 angeordnet.

Die motorseitige Gehäuseschale 11, die Läuferscheibe 3, die magnetische Rückschlußscheibe 5 und die Magnetscheibe 7 mit integriertem Rückschluss und gehäusefestem Hohlrad 4 bilden den Scheibenläufermotor 1, der von der Elektronikeinheit 15 mitsamt den Bürsten komplettiert wird. Eine Antriebswelle 9 ist an der Läuferscheibe 3 befestigt und bewirkt die Übertragung der Drehbewegung auf das Planetengetriebe 2.

Die Antriebswelle 9 trägt ein drehfest auf ihr montiertes oder drehfest angeformtes Sonnenrad 80, das mit den drei Planetenrädern 81, 82, 89 kämmt, die drehbar auf einem Planetenträger 800 gelagert sind. Der Planetenträger 800 selbst ist drehbar auf der Antriebswelle 9 gelagert.

Die Planetenräder 81, 82, 89 sind dabei sowohl mit der Innenverzahnung 40 eines gehäusefesten Hohlrades 4 als mit der Innenverzahnung 100 eines als Seiltrommel ausgebildeten Abtriebshohlrades 10 in Eingriff und laufen aufgrund der drehbaren Lagerung des Planetenträgers 800 auf den Innenverzahnungen 40 und 100 um. Um das Abtriebshohlrad 10 ist das Fensterheberseil 13 geschlungen, das in einer spiralförmigen Rille auf dem äußeren Umfang des Abtriebshohlrades 10 geführt ist.

In dem in Fig. 11 dargestellten Ausführungsbeispiel bildet das Türinnenblech, Türmodul oder die Trägerplatte der Fahrzeugtür das Basisteil 18 und kann - wie oben erläutert - als Träger- oder Stabilisierungselement sowie als magnetischer Rückschluß in die Konstruktion der Antriebseinheit einbezogen werden.

Wesentlich bei dem in Fig. 11 aber uach in dem voranstehend dargestellten Ausführungsbeispiel ist es, daß sämtliche Komponenten der Antriebseinheit in einer Montagerichtung miteinander fügbar sind und damit eine einfache, zeitsparende und kostengünstige Montage ermöglichen.

## Patentansprüche

1. Antriebseinheit für Verstelleinrichtungen in Kraftfahrzeugen mit einem Elektromotor (1, 1a, 1b), einem Getriebe (2) und einer elektronischen Steuereinrichtung (15),
**dadurch gekennzeichnet,**
**dass** wenigstens ein eine magnetische Funktion des Elektromotors (1, 1a, 1b) erfüllendes Bauteil (5, 5a) des Elektromotors (1, 1a, 1b) zusätzlich eine mechanische Funktion des Getriebes (2) ausübt, indem der magnetische Rückschluss (5) des Elektromotors (1, 1a, 1b) in Verbindung mit einem Untersetzungsgetriebe (2) zur Aufnahme der Innenverzahnung (40) eines gehäusefesten Hohlrades (4) dient, wobei entweder der magnetische Rückschluss (5) die Innenverzahnung (40) des gehäusefesten Hohlrades (4) unmittelbar trägt, indem die Innenverzahnung (40) in eine Ring-Innenfläche des kreisringförmigen magnetischen Rückschlusses (5) eingeformt ist, oder die Innenverzahnung (40) des gehäusefesten Hohlrades (4) an den magnetischen Rückschluss (5) als Kunststoffverzahnung angespritzt ist.

2. Antriebseinheit nach Anspruch 1, **dadurch gekennzeichnet, dass** das Getriebe aus einem Untersetzungsgetriebe (2) mit einem gehäusefesten Hohlrad (4), das eine zylindrische Innenverzahnung (40) mit einer ersten Zähnezahl aufweist, einem Abtriebshohlrad (10), das eine zylindrische Innenverzahnung (100) mit einer zweiten Zähnezahl aufweist, und einem vom Elektromotor (1, 1a, 1b) angetriebenen Antriebskern (8) besteht, der mit der Innenverzahnung (40, 100) des gehäusefesten Hohlrades (4) und des Abtriebshohlrades (10) umlaufend in Eingriff steht.

3. Antriebseinheit nach Anspruch 2, **dadurch gekennzeichnet, dass** zur Ausbildung eines Untersetzungsgetriebes (2) als Umlaufrädergetriebe zwischen dem Antriebskem (8) einerseits und dem gehäusefesten Hohlrad (4) und dem Abtriebshohlrad (10) andererseits ein radialflexibler Ring (6) angeordnet ist, der eine mit dem Antriebskern (8) in Eingriff stehende Innenmantelfläche (62) und eine Außenverzahnung (61) aufweist, von der ein Umfangsabschnitt oder mehrere Umfangsabschnitte partiell mit den Innenverzahnungen (40, 100) des gehäusefesten Hohlrades (4) und des Abtriebshohlrades (10) in Eingriff steht bzw. stehen.

4. Antriebseinheit nach einem der Ansprüche 1 bis 3, **dadurch gekennzeichnet, dass** der Elektromotor aus einem mechanisch kommutierten Motor (1) mit einer elektrische Wicklungen (30) und einen Kollektor tragenden Läuferscheibe (3), einen den mindestens einen Permanentmagneten (7, 71 bis 78) tragenden Stator und einer mit der motorseitigen Gehäuseschale (11) verbundenen Kommutierungseinrichtung (31, 32) besteht.

5. Antriebseinheit nach einem der Ansprüche 1 bis 3, **dadurch gekennzeichnet, dass** der Elektromotor aus einem elektronisch kommutierten Motor (1a) mit einem scheibenförmigen Permanentmagnetrotor (3a) und feststehenden Erregerspulen (7a, 7b) besteht.

6. Antriebseinheit nach Anspruch 5, **dadurch gekennzeichnet, dass** die feststehenden Erregerspulen (7a, 7b) auf einer oder zu beiden Seiten des scheibenförmigen Permanentmagnetrotors (3a) angeordnet sind.

7. Antriebseinheit nach Anspuch 5 oder 6, **dadurch gekennzeichnet, dass** der Per-7. Antriebseinheit nach Anspruch 5 oder 6, **dadurch gekennzeichnet, dass** der Permanentmagnetrotor (3a) aus einer Kombination aus einem Trägerwerkstoff aus Kunststoff oder Leichtmetall und darin eingebetteten Permanentmagneten (30a) besteht.

8. Antriebseinheit nach Anspruch 7, **dadurch gekennzeichnet, dass** die Permanentmagneten (30a) aus gesinterten oder gespritzten Neodynium-Eisen-Bohr-Magneten bestehen.

9. Antriebseinheit nach Anspruch 8, **dadurch gekennzeichnet, dass** die gespritzten Neodynium-Eisen-Bohr-Magnete in Zweikomponenten-Technik hergestellt und direkter Bestandteil des Permanentmagnetrotors (3a) sind.

10. Antriebseinheit nach einem der vorangehenden Ansprüche, **dadurch gekennzeichnet, dass** die Innenverzahnung (40) des gehäusefesten Hohlrades (4) an eine auf der Oberfläche des magnetische Rückschlusses (5, 5a) ausgebildete, zurückgenommene Verzahnung angespritzt ist.

11. Antriebseinheit nach einem der Ansprüche 1 bis 9, **dadurch gekennzeichnet, dass** die Innenverzahnung (40) des gehäusefesten Hohlrades (4) an radiale Ausnehmungen und/oder Vorsprünge des magnetischen Rückschlusses (5, 5a) angespritzt ist.

12. Antriebseinheit nach mindestens einem der voranstehenden Ansprüche, **dadurch gekennzeichnet, dass** der magnetische Rückschluss (5) Mittel zur Aufnahme und Positionierung des mindestens einen vorzugsweise tablettenförmigen, kreisringsegmentförmigen oder kreisförmigen Permanentmagneten (7; 71 - 78) aufweist.

13. Antriebseinheit nach Anspruch 12, **dadurch gekennzeichnet, dass** der magnetische Rückschluss (5) ringscheibenförmig ausgebildet ist und daß die Permanentmagneten (7; 71 -78) mittels eines die Ring-Innenfläche (50) des ringscheibenförmigen magnetischen Rückschlusses (5) umfassenden Kunststoffringes (45), der die Innenverzahnung (40, 100) des gehäusefesten Hohlrades (4) trägt, positioniert und in ihrer Lage fixiert sind.

14. Antriebseinheit nach mindestens einem der voranstehenden Ansprüche, **dadurch gekennzeichnet, dass** der magnetische Rückschluss (5, 5a) nach dem Befestigen der Antriebseinheit mindestens teilweise einen direkten Kontakt zu einem Türinnenblech, Türmodul oder einer Trägerplatte einer Fahrzeugtür (18) hat.

15. Antriebseinheit nach mindestens einem der voranstehenden Ansprüche, **dadurch gekennzeichnet, dass** der magnetische Rückschluss (5, 5a) nur im flussführenden Bereich verstärkt ausgebildet ist.

16. Antriebseinheit nach mindestens einem der vorangehenden Ansprüche, **dadurch gekennzeichnet, dass** in der Läuferscheibe (3, 3a) in radialem Abstand zur Antriebswelle (9) Lagerstellen für den Antriebskern (8) des Untersetzungsgetriebes (2) ausgebildet sind.

17. Antriebseinheit nach Anspruch 16, **dadurch gekennzeichnet, dass** der Antriebskern (8) mindestens zwei diametral zur Antriebswelle (9) angeordnete Planetenräder (81, 82) enthält, deren Achsen (85, 86) mit der Läuferscheibe (3) verbunden sind.

18. Antriebseinheit nach Anspruch 16 oder 17, **dadurch gekennzeichnet, dass** die Antriebswelle (9) mit einer Nabe (80) verbunden ist, in die die radial zur Antriebswelle (9) beabstandeten Achsen (85, 86) der Planetenräder (81, 82) eingesetzt sind.

19. Antriebseinheit nach mindestens einem der vorangehenden Ansprüche, **dadurch gekennzeichnet, dass** die Nabe (80) aus einem an die Läuferscheibe (3, 3a) angespritzten Nabenteller (800) und einem den Mittelbereich der Antriebswelle (9) umgebenden Nabenzylinder (801) besteht.

20. Antriebseinheit nach mindestens einem der voranstehenden Ansprüche, **dadurch gekennzeichnet, dass** die motorseitige Gehäuseschale (11, 11a) aus einem ferromagnetischen Material besteht und Tell des magnetischen Rückschlusses ist.

21. Antriebseinheit nach mindestens einem der voranstehenden Ansprüche 1 bis 19, **dadurch gekennzeichnet, dass** die motorseitige Gehäuseschale (1,1, 11a) aus Kunststoff besteht und mit einem ferromagnetischen Rücksehlusselement Verbunden ist.

22. Antriebseinheit nach Anspruch 20 oder 21, **dadurch gekennzeichnet dass** die motorseitige Gehäuseschale (11, 11a) integraler Bestandteil eines Trägerelements (z.B. einer Leiterplatte) der elektronischen Steuereinrichtung (15) ist.

23. Antriebseinheit nach Anspruch 20 oder 21, **dadurch gekennzeichnet, dass** die motorseitige Gehäuseschale (11, 11a) mit der elektronischen Steuereinrichtung (15) verbindbar ist.

24. Antriebseinheit nach mindestens einem der voranstehenden Ansprüche 20 bis 23, **dadurch gekennzeichnet, dass** die motorseitige Gehäuseschale (11, 11a) eine Sensoreinrichtung für die Antriebseinheit trägt.

25. Antriebseinheit nach mindestens einem der vorangehenden Ansprüche, **dadurch gekennzeichnet, dass** die Antriebswelle (9) sowohl die mit der Läuferscheibe (3, 3a) verbundene Motorwelle als auch die mit dem Antriebskern (8) verbundene Getriebewelle bildet.

26. Antriebseinheit nach mindestens einem der voranstehenden Ansprüche, **dadurch gekennzeichnet, dass** die getriebeseitige Gehäuseschale (12) ein Lagerelement (92) aufweist, dessen innerer Bereich die Antriebswelle (9) abstützt und auf dessen äußeren Bereich (90) das Abtriebshohlrad (10) rückwirkungsfrei gelagert ist.

27. Antriebseinheit nach mindestens einem der voranstehenden Ansprüche, **dadurch gekennzeichnet, dass** die angespitzte Kunststoffverzahnung (40) des gehäusefesten Hohlrades (4) eine konische Wasserablaufrinne (41) enthält, die dichtend an einer dem Elektromotor (1) zugewandten Innenfläche des Abtriebshohlrades (10) anliegt.

28. Antriebseinheit nach mindestens einem der voranstehenden Ansprüche, **dadurch gekennzeichnet, dass** der radialflexible Ring (6) durch die Planetenräder (81, 82) oder an der mit der Nabe (80) verbundene Elemente geometrisch so geformt ist, daß er mit der Gegenverzahnung, insbesondere in Bezug auf die Anzahl gleichzeitig in die Gegenverzahnung eingreifender Zähne und die Eingriffstiefe, in vorgebbarer Weise in Eingriff steht.

29. Antriebseinheit nach mindestens einem der vorangehenden Ansprüche, **dadurch gekennzeichnet, dass** der Elektromotor (1) und das Getriebe (2) im montierten Zustand miteinander verclipst sind.

30. Antriebseinheit nach mindestens einem der vorangehenden Ansprüche, **dadurch gekennzeichnet, dass** der magnetische Rückschluss (5, 5a) und die Permanentmagneten (7; 71 bis 78; 30a) in einer Kombination aus weich-und hartmagnetischem Material bestehen und ganz oder teilweise im Spritzgußverfahren hergestellt sind.

31. Antriebseinheit nach mindestens einem der vorangehenden Ansprüche, **dadurch gekennzeichnet, dass** die Planetenräder (81, 82) um die Achsen (85, 86) angeordnete, hohlzylindrische Lagerhülsen (87, 88) aus einem Sinterwerkstoff aufweisen.

32. Antriebseinheit nach Anspruch 31, **dadurch gekennzeichnet, dass** die Lagerhülsen (87, 88) einen toleranzausgleichenden und schwingungsdämpfenden äusseren elastischen Belag (83, 84) aufweisen.

33. Antriebseinheit nach Anspruch 32, **dadurch gekennzeichnet, dass** die toleranzausgleichenden und schwingungsdämpfenden äusseren elastischen Beläge (83, 84) als profilierte Rippenräder ausgebildet sind.

34. Antriebseinheit nach mindestens einem der vorangehenden Ansprüche, **dadurch gekennzeichnet, dass** die Achsen (85, 86) der Planetenräder (81, 82) an die Nabe (80) angespritzt sind.

35. Antriebseinheit nach mindestens einem der vorangehenden Ansprüche, **dadurch gekennzeichnet, dass** die Nabe (80) Schaufelelemente zur Bildung eines Axiallüfters aufweist, mit der ein Kühlluftstrom von einer Trockenraumseite der Antriebseinheit, vorzugsweise der Seite des Elektromotors (1), angesaugt und an eine Naßraumseite der Antriebseinheit, vorzugsweise über das Abtriebshohlrad (10) und die getriebeseitige Gehäuseschale (12) abgibt

36. Antriebseinheit nach mindestens einem der voranstehenden Ansprüche für einen Seilfensterheber eines Kraftfahrzeugs, **dadurch gekennzeichnet, dass** das Abtriebshohlrad als Seilrolle (10) ausgebildet ist und dass die getriebeseitige Gehäuseschale (12) Öffnungen (120) zur Durchführung eines Fensterheberseils (13) aufweist.

37. Antriebseinheit nach Anspruch 36 **dadurch gekennzeichnet, dass** in der Seilaufwicklung (101) der Seilrolle (10) eine variable Einhängung für das Fensterheberseil (13) vorgesehen ist.

38. Antriebseinheit nach mindestens einem der voranstehenden Ansprüche, **dadurch gekennzeichnet, dass** Bowdenabstützungen (14) eines das Fensterheberseil (13) umgebenden Bowdens unmittelbar mit der getriebeseitigen Gehäuseschale (12) in beliebiger Position verbindbar sind, wobei die Seileinhängungen an der Seiltrommel (10) so ausgebildet sind, dass das Fensterheberseil (13) am Ende der Montage einhängbar ist.

39. Antriebseinheit nach mindestens einem der vorangehenden Ansprüche, **dadurch gekennzeichnet, dass** die Seiltrommel (10) und der radialflexible Ring (6) ein Funktionselement bilden.

40. Antriebseinheit nach mindestens einem der vorangehenden Ansprüche für eine Verstelleinrichtung in Kraftfahrzeugtüren, **dadurch gekennzeichnet, dass** die Befestigung der Antriebseinheit auf einem Türmodul mittels eines Bajonettverschlusses oder mittels Clipselementen erfolgt.

41. Antriebseinheit nach mindestens einem der voranstehenden Ansprüche, **dadurch gekennzeichnet, dass** die Komponenten (1, 1a; 2; 15) der Antriebseinheit in einer Montagerichtung miteinander montierbar sind.

42. Antriebseinheit nach mindestens einem der voranstehenden Ansprüche, **dadurch gekennzeichnet, dass** das die Antriebseinheit aufnehmende Basisteil (18, z.B. Türblech, Türmodul oder sonstiger Träger, insbesondere einer Verstellvorrichtung für Kraftfahrzeuge) ferromagnetisch ist und die Komponenten (1, 1a; 2; 15) der Antriebseinheit so mit dem Basisteil (18) verbunden sind, dass das Basisteil (18) einen Teil des magnetischen Ruckschtusspfades bildet.

43. Antriebseinheit nach mindestens einem der vorangehenden Ansprüche, **dadurch gekennzeichnet, dass** das Basisteil (18) zumindest teilweise als mechanisch tragendes Teil der Antriebseinheit ausgebildet ist.

44. Antriebseinheit nach mindestens einem der voranstehenden Ansprüche, **dadurch gekennzeichnet, dass** der magnetische Rückschluss (5, 5a) Befestigungsstellen für die motorseitige Gehäuseschale (11, 11a), getriebeseitige Gehäuseschale (12) und/oder des die Antriebseinheit aufnehmenden Basisteils (18) aufweist.

45. Antriebseinheit nach mindestens einem der voranstehenden Ansprüche, **dadurch gekennzeichnet, dass** die Antriebseinheit so mit dem Basisteil (18) verbindbar ist, dass Halbleiter-Bauelemente zur Speisung des Elektromotors thermisch mit dem als Kühlkörper dienenden Basisteil (18) verbindbar sind.

46. Antriebseinheit nach mindestens einem der voranstehenden Ansprüche, **dadurch gekennzeichnet, dass** die Antriebskomponenten so mit dem Basisteil (18) verbindbar sind, dass die Verlustwärme des Elektromotors (1, 1a, 1b) über das Basisteil (18) zumindest teilweise abgeführt wird.

## Claims

1. Driving unit for adjusting devices in motor vehicles, with an electric motor (1, 1 a, 1 b), with a gear (2) and with an electronic control device (15),
**characterized in that**
at least one component (5, 5a) of the electric motor (1, 1 a, 1b), the said component fulfilling a magnetic function of the electric motor (1, 1a, 1 b), additionally performs a mechanical function of the gear (2), **in that** the magnetic return (5) of the electric motor (1, 1a, 1 b) serves, in conjunction with a reduction gear (2), for receiving the inner toothing (40) of a housing-fixed ring wheel (4), either the magnetic return (5) directly carrying the inner toothing (40) of the housing-fixed ring wheel (4), **in that** the inner toothing (40) is integrally formed into a ring inner surface of the circular-ring-shaped magnetic return (5), or the inner toothing (40) of the housing-fixed ring wheel (4) being injection-moulded as plastic toothing onto the magnetic return (5).

2. Drive unit according to claim 1 **characterised in that** the gearbox comprises a reduction gearbox (2) with hollow wheel (4) fixed on the housing and having a cylindrical internally toothed spline (40) with a first number of teeth, a driven hollow wheel (10) which has a cylindrical internally toothed spline (100) with a second number of teeth, and a drive core (8) driven by the electric motor (1, 1a, 1 b), whereby the core engages circumferentially with the internally toothed splines (40, 100) of the hollow wheel (4) fixed on the housing, and of the driven hollow wheel (10).

3. Drive unit according to claim 2 **characterised in that** in order to form a reduction gearbox (2) as revolving wheel gearbox between the drive core (8) on one side and the hollow wheel (4) fixed on the housing and driven hollow wheel (10) on the other side, there is a radially flexible ring (6) which has an internal sleeve face (62) engaging with the drive core (8), as well as an externally toothed spline (61) of which a circumferential section or several circumferential sections engage(s) partially with the internally toothed splines (40, 100) of the hollow wheel (4) fixed on the housing and the driven hollow wheel (10).

4. Drive unit according to one of the claims 1 to 3 **characterised in that** the electric motor consists of a mechanically commutated motor (1) with electric windings (30) and a collector-supporting rotor disc (3), a stator supporting the at least one permanent magnet (7, 71 to 78), and a commutating device (31, 32) which is connected to the motor side crankcase casing (11).

5. Drive unit according to one of the claims 1 to 3 **characterised in that** the electric motor consists of an electronically commutated motor (1 a) with a disc like permanent magnet motor (3a) and fixed exciter coils (7a, 7b).

6. Drive unit according to claim 5 **characterised in that** the fixed exciter coils (7a, 7b) are mounted on one or both sides of the disc like permanent magnet rotor (3a).

7. Drive unit according to claim 5 or 6 **characterised in that** the permanent magnet rotor (3a) consists of a combination of a support material of plastics or light metal and permanent magnets (30a) embedded therein.

8. Drive unit according to claim 7 **characterised in that** the permanent magnets (30a) are made of sintered or injected neodymium iron bore magnets.

9. Drive unit according to claim 8 **characterised in that** the injected neodymium iron bore magnets are made using the twin component technology and are a direct constituent part of the permanent magnet rotor (3a).

10. Drive unit according to one of the preceding claims **characterised in that** the internal toothed spline (40) of the hollow wheel (4) fixed on the housing is injection moulded on a recessed toothing formed on the surface of the magnetic short circuit (5, 5a).

11. Drive unit according to on of the claims 1 to 9 **characterised in that** the internal toothed spline (40) of the hollow wheel (4) fixed on the housing is injection moulded on radial recesses and/or projections of the magnetic short circuit (5, 5a).

12. Drive unit according to at least one of the preceding claims **characterised in that** the magnetic short circuit (5) has means for locating and positioning the at least one preferably tablet-formed circular ring segment shaped or circular ring shaped permanent magnet (7; 71-78).

13. Drive unit according to claim 12 **characterised in that** the magnetic short circuit (5) is formed ring disc shaped and the permanent magnets (7; 71-78) are positioned and fixed in position by means of a plastics ring (45) which surrounds the ring inside face (50) of the ring disc shaped magnetic short circuit (5) and which supports the internal toothed spline (40, 100) of the hollow wheel (4) fixed on the housing.

14. Drive unit according to at least one of the preceding claims **characterised in that** the magnetic short circuit (5, 5a) after fixing the drive unit has at least in part a direct contact with the door inside panel, door module or support plate of a vehicle door (18).

15. Drive unit according to at least one of the preceding claims **characterised in that** the magnetic short circuit (5, 5a) is designed reinforced only in the flow-guiding region.

16. Drive unit according to at least one of the preceding claims **characterised in that** bearing sites for the drive core (8) of the reduction gearbox (2) are formed in the rotor disc (3, 3a) radially spaced from the drive shaft (9).

17. Drive unit according to claim 16 **characterised in that** the drive core (8) contains at least two planetary wheels (81, 82) arranged diametrically relative to the drive shaft (9) and whose axes (85, 86) are connected to the rotor disc (3).

18. Drive unit according to claim 16 or 17 **characterised in that** the drive shaft (9) is connected to a hub (80) in which the axes (85, 86) of the planetary wheels (81, 82) are inserted radially spaced from the drive shaft (9).

19. Drive unit according to at least one of the preceding claims **characterised in that** the hub (80) consists of a hub plate (800) injection moulded on the rotor disc (3, 3a), and of a hub cylinder (801) which surrounds the centre region of the drive shaft (9).

20. Drive unit according to at least one of the preceding claims **characterised in that** the motor side crankcase casing (11, 11a) consists of a ferromagnetic material and is part of the magnetic short circuit.

21. Drive unit according to at least one of the preceding claims 1 to 19 **characterised in that** the motor side crankcase casing (11, 11 a) consists of plastics and is connected to a ferromagnetic short circuit element.

22. Drive unit according to claim 20 or 21 **characterised in that** the motor side crankcase casing (11, 11a) is an integral constituent part of a support element (e.g. a conductor plate) of the electronic control device (15).

23. Drive unit according to claim 20 or 21 **characterised in that** the motor side crankcase casing (11, 11a) is connectable with the electronic control device (15).

24. Drive unit according to at least one of the preceding claims 20 to 23 **characterised in that** the motor side crankcase casing (11, 11 a) supports a sensor device for the drive unit.

25. Drive unit according to at least one of the preceding claims **characterised in that** the drive shaft (9) forms both the motor shaft connected to the rotor disc (3, 3a) and the gearbox shaft connected to the drive core (8).

26. Drive unit according to at least one of the preceding claims **characterised in that** the gearbox side crankcase casing (12) has a bearing element (92) whose inner region supports the drive shaft (9) and on whose outer region (90) the driven hollow wheel (10) is mounted free of interaction.

27. Drive unit according to at least one of the preceding claims **characterised in that** the injection moulded plastics toothed spline (40) of the hollow wheel (4) fixed on the housing contains a conical water drainage channel (41) which sealingly adjoins an inner face of the driven hollow wheel (10) facing the electric motor (1).

28. Drive unit according to at least one of the preceding claims **characterised in that** the radially flexible ring (6) is geometrically shaped by the planetary wheels (81, 82) or on the elements connected to the hub (80) so that it engages in predeterminable manner with the counter teeth, more particularly in relation to the number of teeth engaging simultaneously in the counter teeth and to the engagement depth.

29. Drive unit according to at least one of the preceding claims **characterised in that** the electric motor (1) and gearbox (2) are clipped together in the assembled state.

30. Drive unit according to at least one of the preceding claims **characterised in that** the magnetic short circuit (5, 5a) and the permanent magnets (7; 71 to 78; 30a) consist in a combination of soft and hard magnetic material and are made entirely or in part in the injection moulding process.

31. Drive unit according to at least one of the preceding claims **characterised in that** the planetary wheels (81, 82) have hollow cylindrical bearing sleeves (87, 88) made of sintered material and mounted about the axes (85, 86).

32. Drive unit according to claim 31 **characterised in that** the bearing sleeves (87, 88) have a tolerance-compensating and vibration-damping outer elastic lining (83, 84).

33. Drive unit according to claim 32 **characterised in that** the tolerance compensating and vibration-damping outer elastic linings (83, 84) are formed as profiled ribbed wheels.

34. Drive unit according to at least one of the preceding claims **characterised in that** the axes (85, 86) of the planetary wheels (81, 82) are injection moulded on the hub (80).

35. Drive unit according to at least one of the preceding claims **characterised in that** the hub (80) has blade elements for forming an axial ventilator with which a cooling air current is sucked in from a dry space side of the drive unit, preferably the side of the electric motor (1), and discharged to a wet space side of the drive unit, preferably through the driven hollow wheel (10) and the gearbox side crankcase casing (12).

36. Drive unit according to at least one of the preceding claims for a cable window lifter of a motor vehicle **characterised in that** the driven hollow wheel is formed as a cable roller (10) and that the gearbox side crankcase casing (12) has openings (120) for passing through a window lifter cable (13).

37. Drive unit according to claim 36 **characterised in that** a variable mounting for the window lifter cable (13) is provided in the cable winding (101) of the cable roller (10) .

38. Drive unit according to at least one of the preceding claims **characterised in that** Bowden cable supports (14) of a Bowden cable surrounding the window lifter cable (13) are connectable in any position directly with the gearbox side crankcase casing (12) whereby the cable mountings are formed on the cable drum (10) so that the window lifter cable (13) can be hung at the end of assembly.

39. Drive unit according to at least one of the preceding claims **characterised in that** the cable drum (10) and the radially flexible ring (6) form a function element.

40. Drive unit according to at least one of the preceding claims for an adjusting device in motor vehicle doors **characterised in that** the fixing of the drive unit on a door module is undertaken by a bayonet lock or by clip elements.

41. Drive unit according to at least one of the preceding claims **characterised in that** the components (1, 1 a; 2; 15) of the drive unit can be fitted together in one assembly direction.

42. Drive unit according to at least one of the preceding claims **characterised in that** the base part (18, e.g. door panel, door module or other support, more particularly of an adjusting device for motor vehicles) holding the drive unit is ferromagnetic and the components (1, 1 a, 2; 15) of the drive unit are connected to the base part (18) so that the base part (18) forms a part of the magnetic short circuit path.

43. Drive unit according to at least one of the preceding claims **characterised in that** the base part (18) is formed at least in part as a mechanically supporting part of the drive unit.

44. Drive unit according to at least one of the preceding claims **characterised in that** the magnetic short circuit (5, 5a) has fixing points for the motor side crankcase casing (11, 11a), gearbox side crankcase casing (12) and/or the base part (18) housing the drive unit.

45. Drive unit according to at least one of the preceding claims **characterised in that** the drive unit is connectable with the base part (18) so that semi conductor elements for supplying the electric motor can be connected thermally to the base part (18) which serves as the coolant body.

46. Drive unit according to at least one of the preceding claims **characterised in that** the drive components are connectable with the base part (18) so that the heat loss of the electric motor (1,1 a, 1b) is discharged at least in part through the base part (18).

## Revendications

1. Unité d'entraînement pour des dispositifs de réglage dans des véhicules automobiles, comprenant un moteur électrique (1, 1a, 1b), une transmission (2) et un dispositif de commande électronique (15),
**caractérisée en ce**
**qu'**au moins un composant (5, 5a) du moteur électrique (1, 1a, 1 b) remplissant une fonction magnétique du moteur électrique (1, 1 a, 1 b) exerce en outre une fonction mécanique de la transmission (2), par le fait que la culasse magnétique (5) du moteur électrique (1, 1 a, 1b), en association avec un réducteur (2), sert à recevoir la denture interne (40) d'une couronne dentée (4) fixée au boîtier, soit la culasse magnétique (5) portant directement la denture interne (40) de la couronne dentée (4) fixée au boîtier, par le fait que la denture interne (40) est façonnée dans une surface interne annulaire de la culasse magnétique (5) de forme annulaire circulaire, soit la denture interne (40) de la couronne dentée (4) fixée au boîtier étant surmoulée sur la culasse magnétique (5) sous forme de denture en plastique.

2. Unité d'entraînement selon la revendication 1, **caractérisée en ce que** l'engrenage comprend un engrenage réducteur (2) avec une roue creuse (4) solidaire du boîtier, qui présente une denture intérieure (40) cylindrique avec un premier nombre de dents, une roue creuse d'entraînement (10), qui présente une denture intérieure (100) cylindrique avec un second nombre de dents et un noyau d'entraînement (8) entraîné par le moteur électrique (1, 1 a, 1b), qui est en prise périphérique avec la denture intérieure (40, 100) de la roue creuse (4) solidaire du boîtier et de la roue creuse de sortie (10).

3. Unité d'entraînement selon la revendication 2, **caractérisée en ce que**, pour former un réducteur (2) comme engrenage planétaire, une bague (6) à flexibilité radiale est disposée entre le noyau d'entraînement (8) d'une part et la roue creuse (4) solidaire du boîtier et la roue creuse de sortie (10) d'autre part, laquelle bague présente une surface périphérique intérieure (62) en prise avec le noyau d'entraînement (8) et une denture extérieure (61), de laquelle une partie périphérique ou plusieurs parties périphériques sont en prise partiellement avec les dentures intérieures (40, 100) de la roue creuse (4) solidaire du boîtier et de la roue creuse de sortie (10).

4. Unité d'entraînement selon l'une quelconque des revendications 1 à 3, **caractérisée en ce que** le moteur électrique se compose d'un moteur électrique (1) à commutation mécanique avec un disque d'induit (3) portant des enroulements (30) électriques et un collecteur, d'un stator portant le au moins un aimant permanent (7, 71 à 78) et d'un appareil de commutation (31, 32) relié à la coque de boîtier (11) côté moteur.

5. Unité d'entraînement selon l'une quelconque des revendications 1 à 3, **caractérisée en ce que** le moteur électrique se compose d'un moteur (1a) à commutation électronique avec un rotor à aimant permanent (3a) en forme de disque et de bobines excitatrices (7, 7a) fixes.

6. Unité d'entraînement selon la revendication 5, **caractérisée en ce que** les bobines excitatrices (7a, 7b) fixes sont disposées sur un côté ou des deux côtés du rotor à aimant permanent (3 a) en forme de disque.

7. Unité d'entraînement selon la revendication 5 ou 6, **caractérisée en ce que** le rotor à aimant permanent (3a) se compose d'une combinaison d'un matériau support en matière synthétique ou en métal léger et d'aimants permanent (30a) enrobé à l'intérieur.

8. Unité d'entraînement selon la revendication 7, **caractérisée en ce que** les aimants permanents (30a) se composent d'aimants de néodyme-fer-bore frittés ou moulés par injection.

9. Unité d'entraînement selon la revendication 8, **caractérisée en ce que** les aimants moulés par injection de néodyme-fer-bore sont fabriqués dans une technique à deux composants et font partie directement du rotor à aimant permanent (3a).

10. Unité d'entraînement selon l'une quelconque des revendications précédentes, **caractérisée en ce que** la denture intérieure (40) de la roue creuse (4) solidaire du boîtier est injectée sur une denture reculée et formée sur la surface du retour (5, 5a) magnétique.

11. Unité d'entraînement selon l'une quelconque des revendications 1 à 9 , **caractérisée en ce que** la denture intérieure (40) de la roue creuse (4) solidaire du boîtier est injectée sur des cavités radiales et/ou des saillies du retour (5, 5a) magnétique.

12. Unité d'entraînement selon au moins l'une quelconque des revendications précédentes, **caractérisée en ce que** le retour (5) magnétique présente des moyens pour le logement et le positionnement du au moins un aimant permanent (7 ; 71 - 78) de préférence en forme de comprimé, de segment d'anneau circulaire ou de forme circulaire.

13. Unité d'entraînement selon la revendication 12, **caractérisée en ce que** le retour (5) magnétique est conçu en forme de disque annulaire et **en ce que** les aimants permanents (7 ; 71 - 78) sont positionnés au moyen d'une bague en matière synthétique (45) comprenant la surface intérieure annulaire (50) du retour (5) magnétique en forme de disque annulaire, laquelle bague porte la denture intérieure (40, 100) de la roue creuse (4) solidaire du boîtier, et sont fixés dans leur position.

14. Unité d'entraînement selon au moins l'une quelconque des revendications précédentes, **caractérisée en ce que** le retour (5, 5a) magnétique a après la fixation de l'unité d'entraînement au moins partiellement un contact direct avec une tôle intérieure de porte, un module de porte ou une plaque support d'une porte de véhicule (18).

15. Unité d'entraînement selon au moins l'une quelconque des revendications précédentes, **caractérisée en ce que** le retour (5, 5a) magnétique est réalisé dans une version renforcée seulement dans la zone véhiculant le flux.

16. Unité d'entraînement selon au moins l'une quelconque des revendications précédentes, **caractérisée en ce que** des points de palier pour le noyau d'entraînement (8) du réducteur (2) sont réalisés dans le disque d'induit (3, 3a) à distance radiale de l'arbre d'entraînement (9).

17. Unité d'entraînement selon la revendication 16, **caractérisée en ce que** le noyau d'entraînement (8) contient au moins deux roues planétaires (81, 82) disposées diamétralement par rapport à l'arbre d'entraînement (9), roues dont les axes (85, 86) sont reliés au disque d'induit (3).

18. Unité d'entraînement selon la revendication 16 ou 17, **caractérisée en ce que** l'arbre d'entraînement (9) est relié à un moyeu (80), dans lequel les axes (85, 86), espacés radialement de l'arbre d'entraînement (9), des roues planétaires (81, 82) sont insérés.

19. Unité d'entraînement selon au moins l'une quelconque des revendications précédentes, **caractérisée en ce que** le moyeu (80) comprend un plateau de moyeu (800) injecté sur le disque d'induit (3, 3a) et un cylindre de moyeu (801) entourant la zone centrale de l'arbre d'entraînement (9).

20. Unité d'entraînement selon au moins l'une quelconque des revendications précédentes, **caractérisée en ce que** la coque de boîtier (11, 11a) côté moteur est à base d'un matériau ferromagnétique et fait partie du retour magnétique.

21. Unité d'entraînement selon au moins l'une quelconque des revendications précédentes 1 à 19, **caractérisée en ce que** la coque de boîtier (11, 11a) côté moteur est en matière synthétique et est reliée à un élément de retour ferromagnétique.

22. Unité d'entraînement selon la revendication 20 ou 21, **caractérisée en ce que** la coque de boîtier (11, 11a) côté moteur fait partie intégrante d'un élément support (par exemple d'une carte à circuits imprimés) de l'appareil de commande (15) électronique.

23. Unité d'entraînement selon la revendication 20 ou 21, **caractérisée en ce que** la coque de boîtier (11, 11 a) côté moteur peut être reliée avec l'appareil de commande (15) électronique.

24. Unité d'entraînement selon au moins l'une quelconque des revendications précédentes 20 à 23, **caractérisée en ce que** la coque de boîtier (11, 11a) côté moteur porte un appareil de capteur pour l'unité d'entraînement.

25. Unité d'entraînement selon au moins l'une quelconque des revendications précédentes, **caractérisée en ce que** l'arbre d'entraînement (9) forme aussi bien l'arbre moteur relié au disque d'induit (3, 3a) que l'arbre de transmission relié au noyau d'entraînement (8).

26. Unité d'entraînement selon au moins l'une quelconque des revendications précédentes, **caractérisée en ce que** la coque du boîtier (12) côté engrenage présente un élément de palier (92), dont la zone intérieure supporte l'arbre d'entraînement (9) et sur la zone (90) extérieure duquel la roue creuse de sortie (10) est logée sans rétroaction.

27. Unité d'entraînement selon au moins l'une quelconque des revendications précédentes, **caractérisée en ce que** la denture en matière synthétique (40) injectée de la roue creuse (4) solidaire du boîtier contient un conduit d'écoulement d'eau (41) de forme conique, qui s'appuie de façon étanche sur une surface intérieure, tournée vers le moteur électrique (1), de la roue creuse de sortie (10).

28. Unité d'entraînement selon au moins l'une quelconque des revendications précédentes, **caractérisée en ce que** la bague (6) flexible dans le sens radial passant par les roues planétaires (81, 82) ou sur les éléments reliés au moyeu (80), est formée géométriquement de telle sorte qu'elle est en prise de façon prédéfinissable avec la contre-denture, en particulier par rapport au nombre de dents qui s'engagent en même temps dans la contre-denture et à la profondeur d'engagement.

29. Unité d'entraînement selon au moins l'une quelconque des revendications précédentes, **caractérisée en ce que** le moteur électrique (1) et l'engrenage (2) sont clipsés entre eux dans l'état monté.

30. Unité d'entraînement selon au moins l'une quelconque des revendications précédentes, **caractérisée en ce que** le retour (5, 5a) magnétique et les aimants permanents (7 ; 71 à 78 ; 30a) consistent dans une combinaison à base de matériau magnétique doux et magnétique dur et sont fabriqués entièrement ou partiellement dans le procédé de moulage par injection.

31. Unité d'entraînement selon au moins l'une quelconque des revendications précédentes, **caractérisée en ce que** les roues planétaires (81, 82) présentent des coussinets (87, 88) disposés autour des axes (85, 86) et en forme de cylindres creux à base d'un matériau fritté.

32. Unité d'entraînement selon la revendication 31, **caractérisée en ce que** les coussinets (87, 88) présentent un revêtement (83, 84) élastique extérieur qui compense les tolérances et amortit les vibrations.

33. Unité d'entraînement selon la revendication 32, **caractérisée en ce que** les revêtements (83, 84) élastiques extérieurs qui équilibrent les tolérances et amortissent les vibrations sont conçus comme des roues nervurées et profilées.

34. Unité d'entraînement selon au moins l'une quelconque des revendications précédentes, **caractérisée en ce que** les axes (85, 86) des roues planétaires (81, 82) sont injectés sur le moyeu (80).

35. Unité d'entraînement selon au moins l'une quelconque des revendications précédentes, **caractérisée en ce que** le moyeu (80) présente des éléments de pales pour former un ventilateur axial, avec lequel on envoie un courant d'air de refroidissement à partir d'un côté d'espace sec de l'unité d'entraînement, de préférence du côté du moteur électrique (1) et on l'envoie à un côté d'espace humide de l'unité d'entraînement, de préférence au moyen de la roue creuse de sortie (10) et de la coque de boîtier (12) côté engrenage.

36. Unité d'entraînement selon au moins l'une quelconque des revendications précédentes pour un lève-vitre à câble d'un véhicule automobile, **caractérisée en ce que** la roue creuse de sortie est conçue comme un rouleau à câble (10) et **en ce que** la coque de boîtier (12) côté engrenage présente des ouvertures (120) pour le passage d'un câble de lève-vitre (13).

37. Unité d'entraînement selon la revendication 36, **caractérisée en ce qu'**une suspension variable pour le câble de lève-vitre (13) est prévue dans l'enroulement de câble (101) du rouleau de câble (10).

38. Unité d'entraînement selon au moins l'une quelconque des revendications précédentes, **caractérisée en ce que** des supports Bowden (14) d'un Bowden entourant le câble de lève-vitre (13) peuvent être reliés directement à la coque de boîtier (12) côté engrenage dans une position quelconque, les suspensions de câble étant conçues sur le tambour de câble (10) de telle sorte que le câble de lève-vitre (13) peut être accroché sur l'extrémité du montage.

39. Unité d'entraînement selon au moins l'une quelconque des revendications précédentes, **caractérisée en ce que** le tambour de câble (10) et la bague (6) à flexibilité radiale forment un élément de fonction.

40. Unité d'entraînement selon au moins l'une quelconque des revendications précédentes pour un appareil de positionnement sur les portes de véhicules,**caractérisée en ce que** la fixation de l'unité d'entraînement sur un module de porte s'effectue au moyen d'une fermeture à baïonnette ou au moyen d'élément de clipsage.

41. Unité d'entraînement selon au moins l'une quelconque des revendications précédentes, **caractérisée en ce que** les composants (1, 1a ; 2 ; 15) de l'unité d'entraînement peuvent être montés entre eux dans un sens de montage.

42. Unité d'entraînement selon au moins l'une quelconque des revendications précédentes, **caractérisée en ce que** la partie de base (18, par exemple tôle de porte, module de porte ou autre support, en particulier un dispositif de positionnement pour véhicules automobiles) recevant l'unité d'entraînement est ferromagnétique et les composants (1, 1a; 2 ; 15) de l'unité d'entraînement sont reliés à la partie de base (18) de telle sorte que la partie de base (18) forme une partie du chemin de retour magnétique.

43. Unité d'entraînement selon au moins l'une quelconque des revendications précédentes, **caractérisée en ce que** la partie de base (18) est conçue au moins partiellement comme une partie mécaniquement porteuse de l'unité d'entraînement.

44. Unité d'entraînement selon au moins l'une quelconque des revendications précédentes, **caractérisée en ce que** le retour (5, 5a) magnétique présente des endroits de fixation pour la coque de boîtier (11, 11a) côté moteur, la coque de boîtier (12) côté engrenage et/ou de la partie de base (18) recevant l'unité d'entraînement.

45. Unité d'entraînement selon au moins l'une quelconque des revendications précédentes, **caractérisée en ce que** l'unité d'entraînement peut être reliée ainsi à la partie de base (18) de telle sorte que des composants à semiconducteurs pour l'alimentation du moteur électrique peuvent être reliés thermiquement à la partie de base (18) servant de corps de refroidissement.

46. Unité d'entraînement selon au moins l'une quelconque des revendications précédentes, **caractérisée en ce que** les composants d'entraînement peuvent être reliés à la partie de base (18) de telle sorte que la chaleur perdue du moteur électrique (1, 1a, 1b) est évacuée au moins partiellement par la partie de base (18).
